(19) Europäisches Patentamt
European Patent Office
Office européen des brevets

(11) EP 4 550 209 A1

(12) EUROPEAN PATENT APPLICATION
published in accordance with Art. 153(4) EPC

(43) Date of publication:
07.05.2025 Bulletin 2025/19

(51) International Patent Classification (IPC):
G06N 3/04 (2023.01)

(21) Application number: 23838966.2

(22) Date of filing: 12.07.2023

(52) Cooperative Patent Classification (CPC):
G06F 18/214; G06N 3/04; G06N 3/0464;
G06N 3/084

(86) International application number:
PCT/CN2023/106905

(87) International publication number:
WO 2024/012476 (18.01.2024 Gazette 2024/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.07.2022 CN 202210832123

(71) Applicant: Huawei Technologies Co., Ltd.
Shenzhen, Guangdong 518129 (CN)

(72) Inventors:
• YU, Dequan
  Shenzhen, Guangdong 518129 (CN)
• ZHAO, Yin
  Shenzhen, Guangdong 518129 (CN)

(74) Representative: Gill Jennings & Every LLP
The Broadgate Tower
20 Primrose Street
London EC2A 2ES (GB)

(54) **MODEL TRAINING METHOD AND RELATED DEVICE**

(57) This application discloses a model training method. The method is applicable to a dynamic computational graph scenario, and is also applicable to a static computational graph scenario. The method includes: obtaining training data; using the training data as an input of a model, and in a training process of the model, calculating a parameter by using a first precision range, to obtain a calculated value; and if the calculated value overflows the first precision range, recalculating the parameter by using a second precision range, and performing iterative training on the model for one or more times by using a recalculated parameter, where the second precision range includes the first precision range, or the second precision range partially overlaps the first precision range. When the calculated value of the parameter overflows the precision range, the precision range used in the training process of the model is adjusted in real time, so that a problem of training stagnation caused by overflow in low-precision training can be effectively resolved. In addition, an initialization solution is customized without relying on manual experience, and training precision can be automatically adjusted layer by layer in real time.

FIG. 3

**Description**

This application claims priority to Chinese Patent Application No. 202210832123.6, filed with the China National Intellectual Property Administration on July 15, 2022 and entitled "MODEL TRAINING METHOD AND RELATED DEVICE", which is incorporated herein by reference in its entirety.

## TECHNICAL FIELD

This application relates to the field of artificial intelligence, and in particular, to a model training method and a related device.

## BACKGROUND

Artificial intelligence (artificial intelligence, AI) is a theory, a method, a technology, and an application system in which human intelligence is simulated and extended by using a digital computer or a machine controlled by a digital computer, to perceive an environment, obtain knowledge, and achieve an optimal result by using the knowledge. A neural network is a dynamic system that is manually established and that uses a directed graph as a topology structure. The neural network processes information by using continuous or discontinuous inputs as a status response, and is an information processing system that aims to simulate a human brain structure and a function of the human brain structure. After decades of development, the artificial neural network has been widely used in many fields, such as pattern recognition, automatic control, signal processing, decision-making assistance, artificial intelligence, and scientific computing, and has achieved extensive success. Especially in many fields such as image processing, audio and video processing, and natural language processing, the artificial neural network is in a booming development stage and is playing an irreplaceable role.

Currently, in parameter storage or parameter calculation in a training process of most neural networks, precision of a used data format is mainly set through manual experience. For example, based on experience, a setting person determines whether a 16-bit half-precision floating-point number (FP16) or a 32-bit single-precision floating-point number (FP32) is to be used for each network layer.

However, setting of precision applicable to a structure of a network layer based on manual experience overly relies on a professional capability of the setting person.

## SUMMARY

This application provides a model training method and a related device, to adjust, in real time when a calculated value of a parameter overflows a precision range, the precision range used in a training process of a model, so that a problem of training stagnation caused by overflow in low-precision training can be effectively resolved.

A first aspect of embodiments of this application provides a model training method. The method is applicable to a dynamic computational graph scenario, and is also applicable to a static computational graph scenario. The dynamic computational graph scenario may be understood as updating a computational graph after a network structure of each layer of a model is calculated. The static computational graph scenario may be understood as updating a computational graph after network structures of all layers of a model are calculated. A main difference is an updating occasion of a computational graph. Calculation of a computational graph is applicable to the method provided in embodiments of this application. The method may be performed by a training device, or may be performed by a component (for example, a processor, a chip, or a chip system) of the training device. The method includes: obtaining training data; using the training data as an input of a model, and in a training process of the model, calculating a parameter by using a first precision range, to obtain a calculated value; and if the calculated value overflows the first precision range, recalculating the parameter by using a second precision range, and performing iterative training on the model for one or more times by using a recalculated parameter, where the second precision range includes the first precision range, or the second precision range partially overlaps the first precision range.

In this embodiment of this application, when the calculated value of the parameter overflows the first precision range in the training process of the model, the parameter is recalculated by using the second precision range. That is, the precision range is automatically adjusted in real time by using overflow information of the calculated value of the parameter, so that memory occupied by model training can be reduced, and model training efficiency can be improved. In this way, problems such as training stagnation or training failure that are caused because the parameter overflows the first precision range are reduced. In addition, in this embodiment of this application, compared with a method in a conventional technology in which a type of a network layer of a model needs to be used to determine whether to use a high-precision floating-point number or a low-precision floating-point number, a precision range to which a parameter is applicable may be adjusted in real time by using overflow information of the parameter, and an overflow problem caused by calculation of a low-precision floating-point number is reduced.

Optionally, in a possible implementation of the first aspect, the model includes a plurality of network structures, and the step of recalculating the parameter by using a second precision range includes: recalculating the parameter by using the second precision range, starting from a network structure of a first layer of the model.

In this possible implementation, if a calculated value of a network structure of a current layer overflows, a new precision range may be selected to perform recalculation starting from the network structure of the first layer of the model, to reduce a problem of a calculation error caused by overflow of the calculated value.

Optionally, in a possible implementation of the first aspect, the model includes a plurality of network structures, and the step of recalculating the parameter by using a second precision range includes: recalculating the parameter by using the second precision range, starting from a current network structure in which the calculated value overflows.

In this possible implementation, if a calculated value of a network structure of a current layer overflows, a new precision range may be selected to perform recalculation on the network structure of the current layer, to reduce a problem of a calculation error caused by overflow of the calculated value.

Optionally, in a possible implementation of the first aspect, the parameter is related to a loss function of the model, or the parameter is related to calculation of the model in a forward propagation process, or the parameter is related to calculation of the model in a backward propagation process.

Optionally, in a possible implementation of the first aspect, the model includes a plurality of network structures, and the parameter includes one or more of the following: an intermediate feature or a value of a loss function of the model, calculated by the plurality of network structures in a forward propagation process, where the intermediate feature is an output feature of any one of the plurality of network structures; and a gradient calculated by the plurality of network structures in a backward propagation process, where the gradient includes a gradient of the intermediate feature and/or a weight gradient of the model.

In this possible implementation, the parameter may be a parameter that needs to be calculated in the forward propagation process or the backward propagation process of the model in the training process, or may be a parameter output by an individual layer of the model, or may be a parameter obtained after calculation of all layers of the entire model ends, or the like. This improves an applicable scenario of the method in the training process. In other words, the method provided in this embodiment of this application may be used to perform precision adjustment for all calculation in the training process of the model.

Optionally, in a possible implementation of the first aspect, when the parameter includes the gradient, the calculated value is a value obtained by dividing the gradient by a scaling coefficient, and the scaling coefficient is used to reduce a probability that the gradient overflows. The method further includes: updating the scaling coefficient by using a first coefficient, where an updated scaling coefficient is used to replace the scaling coefficient that is not updated, to perform next iterative training of the model, and the first coefficient is a positive number less than 1.

In this possible implementation, if a parameter (that is, the value obtained by dividing the gradient by the scaling coefficient) calculated in the backward propagation process overflows, another precision range is used to recalculate the weight gradient, and the scaling coefficient is updated, to reduce overflow of a calculated value in subsequent iterative training.

Optionally, in a possible implementation of the first aspect, a minimum value of the scaling coefficient is a preset threshold greater than or equal to 1, and the preset threshold is used to reduce the probability that the gradient overflows.

In this possible implementation, in a backward calculation process, a lower limit of a value of the scaling coefficient is set, to reduce a risk of subsequent parameter precision underflow.

Optionally, in a possible implementation of the first aspect, when the parameter includes the intermediate feature calculated in the forward propagation process, the foregoing step of recalculating the parameter by using a second precision range includes: using the second precision range to calculate the intermediate feature of an overflow layer or calculate the intermediate feature layer by layer starting from the network structure of the first layer, where the overflow layer is a network structure that is in the plurality of network structures and in which a calculated value of the intermediate feature overflows the first precision range.

In this possible implementation, if the intermediate feature overflows the first precision range, the second precision range may be used to perform recalculation on the overflow layer or perform recalculation starting from the network structure of the first layer. That is, precision ranges of some layers may be modified, or precision ranges of all layers may be modified. This makes the solution flexible.

Optionally, in a possible implementation of the first aspect, when the parameter includes the value of the loss function of the model, the foregoing step of recalculating the parameter by using a second precision range includes: using the second precision range to calculate the value of the loss function or perform calculation layer by layer starting from the network structure of the first layer, until the value of the loss function is obtained.

In this possible implementation, if the value of the loss function overflows the first precision range, the second precision range may be used to recalculate the value of the loss function or perform calculation layer by layer starting from the network structure of the first layer, until the value of the loss function is obtained. That is, precision ranges of some layers may be modified, or precision ranges of all layers may be modified. This makes the solution flexible.

Optionally, in a possible implementation of the first aspect, the foregoing step of training the model by using the recalculated parameter includes: obtaining, in an $N^{th}$ iteration in the training process of the model, a quantity of overflow times of the plurality of network structures in the model based on the first precision range, where N is a positive integer greater than or equal to 1; and if the quantity of overflow times is greater than or equal to a second threshold, determining that an initial precision range in a next iterative training process is to be changed from the first precision range to the second precision range, and clearing the quantity of overflow times to zero.

In this possible implementation, the initial precision range is adjusted by recording the quantity of overflow times, and when the first precision range affects training of the model, the initial precision range is adjusted from the first precision range to the second precision range, to ensure accuracy of subsequent model training.

Optionally, in a possible implementation of the first aspect, the quantity of overflow times includes: a quantity of overflow times of the plurality of network structures in the forward propagation process, and/or a quantity of overflow times of the plurality of network structures in the backward propagation process.

In this possible implementation, a determining condition (that is, determining of the quantity of overflow times) for adjusting the precision range may be a quantity of overflow times in the entire training process, or may be a quantity of overflow times in forward propagation or backward propagation. This improves an applicable scope of the method.

Optionally, in a possible implementation of the first aspect, the parameter is related to a loss function. The loss function may vary according to different training manners of the model. For supervised training, the loss function is used to represent a difference between an output of the model and a label to which the training data belongs. For unsupervised training, the loss function may be a user-defined function. For example, when a task of the model is a classification task, the loss function is used to represent a difference between an output and an input (or a clustering result or the like) of the model. Alternatively, it is understood that, in unsupervised training, it is expected that an output of the model can be restored to an input of the model. For example, a label is training data (that is, an output obtained by the model is sent to another network to restore the training data). It may be understood that the loss function is not limited in this embodiment of this application. The loss function may also be understood as an optimization target function of the model, and may be specifically set based on an actual requirement.

A second aspect of embodiments of this application provides a training device. The training device is applicable to a dynamic computational graph scenario, and is also applicable to a static computational graph scenario. The training device includes: an obtaining unit, configured to obtain training data; and a calculation unit, configured to use the training data as an input of a model, and in a training process of the model, calculate a parameter by using a first precision range, to obtain a calculated value. The calculation unit is further configured to: if the calculated value overflows the first precision range, recalculate the parameter by using a second precision range, and perform iterative training on the model for one or more times by using a recalculated parameter, where the second precision range includes the first precision range, or the second precision range partially overlaps the first precision range.

Optionally, in a possible implementation of the second aspect, the model includes a plurality of network structures, and the calculation unit is specifically configured to recalculate the parameter by using the second precision range, starting from a network structure of a first layer of the model.

Optionally, in a possible implementation of the second aspect, the calculation unit is specifically configured to recalculate the parameter by using the second precision range, starting from a current network structure in which the calculated value overflows.

Optionally, in a possible implementation of the second aspect, the model includes a plurality of network structures, and the parameter includes one or more of the following: an intermediate feature or a value of a loss function of the model, calculated by the plurality of network structures in a forward propagation process, where the intermediate feature is an output feature of any one of the plurality of network structures; and a gradient calculated by the plurality of network structures in a backward propagation process, where the gradient includes a gradient of the intermediate feature and/or a weight gradient of the model.

Optionally, in a possible implementation of the second aspect, when the parameter includes the gradient calculated in the backward propagation process, the calculated value is a value obtained by dividing the gradient by a scaling coefficient, and the scaling coefficient is used to reduce a probability that the gradient overflows. The calculation unit is further configured to update the scaling coefficient by using a first coefficient, where an updated scaling coefficient is used to replace the scaling coefficient that is not updated, to perform next iterative training of the model, the first coefficient is a positive number less than 1, and a minimum value of the scaling coefficient is a preset threshold greater than or equal to 1.

Optionally, in a possible implementation of the second aspect, when the parameter includes the intermediate feature calculated in the forward propagation process, the calculation unit is specifically configured to use the second precision range to calculate the intermediate feature of an overflow layer or calculate the intermediate feature layer by layer starting from the network structure of the first layer, where the overflow layer is a network structure that is in the plurality of network structures and in which a calculated value of the intermediate feature overflows the first precision range.

Optionally, in a possible implementation of the second aspect, when the parameter includes the value of the loss function of the model, the calculation unit is specifically configured to use the second precision range to calculate the value of the loss function or perform calculation layer by layer starting from the network structure of the first layer, until the value of the loss function is obtained.

Optionally, in a possible implementation of the second aspect, the calculation unit is specifically configured to obtain, in an $N^{th}$ iteration in the training process of the model, a quantity of overflow times of the plurality of network structures in the model based on the first precision range, where N is a positive integer greater than or equal to 1. The calculation unit is specifically configured to: if the quantity of overflow times is greater than or equal to a second threshold, determine that an initial precision range in a next iterative training process is to be changed from the first precision range to the second precision range, and clear the quantity of overflow times to zero.

Optionally, in a possible implementation of the second aspect, the quantity of overflow times includes: a quantity of overflow times of the plurality of network structures in the forward propagation process, and/or a quantity of overflow times of the plurality of network structures in the backward propagation process.

A third aspect of this application provides a training device, including a processor. The processor is coupled to a memory, and the memory is configured to store a program or instructions. When the program or the instructions are executed by the processor, the training device is enabled to implement the method in any one of the first aspect or the possible implementations of the first aspect.

A fourth aspect of this application provides a computer-readable medium. The computer-readable medium stores a computer program or instructions. When the computer program or the instructions are run on a computer, the computer is enabled to perform the method in any one of the first aspect or the possible implementations of the first aspect.

A fifth aspect of this application provides a computer program product. When the computer program product is executed on a computer, the computer is enabled to perform the method in any one of the first aspect or the possible implementations of the first aspect.

For technical effects brought by the second aspect, the third aspect, the fourth aspect, the fifth aspect, or any possible implementation thereof, refer to the technical effects brought by the first aspect or different possible implementations of the first aspect. Details are not described herein.

It can be learned from the foregoing technical solutions that this application has the following advantages: When the calculated value of the parameter overflows the first precision range in the training process of the model, the parameter is recalculated by using the second precision range. That is, the precision range is automatically adjusted in real time by using overflow information of the calculated value of the parameter, so that memory occupied by model training can be reduced, and model training efficiency can be improved. In this way, problems such as training stagnation or training failure that are caused because the parameter overflows the first precision range are reduced. In addition, in embodiments of this application, compared with a method in a conventional technology in which a type of a network layer of a model needs to be used to determine whether to use a high-precision floating-point number or a low-precision floating-point number, a precision range to which a parameter is applicable may be adjusted in real time by using overflow information of the parameter, and an overflow problem caused by calculation of a low-precision floating-point number is reduced.

## BRIEF DESCRIPTION OF DRAWINGS

FIG. 1 is a diagram of a structure of a system architecture according to an embodiment of this application;
FIG. 2 is a diagram of a hardware structure of a chip according to an embodiment of this application;
FIG. 3 is a schematic flowchart of a model training method according to an embodiment of this application;
FIG. 4 is an example diagram of a structure of a model according to an embodiment of this application;
FIG. 5A and FIG. 5B are another schematic flowchart of a model training method according to an embodiment of this application;
FIG. 6A and FIG. 6B are another schematic flowchart of a model training method according to an embodiment of this application;
FIG. 7A, FIG. 7B, and FIG. 7C are another schematic flowchart of a model training method according to an embodiment of this application;
FIG. 8 is a diagram of a structure of a training device according to an embodiment of this application; and
FIG. 9 is another diagram of a structure of a training device according to an embodiment of this application.

## DESCRIPTION OF EMBODIMENTS

This application provides a model training method and a related device, to adjust, in real time when a calculated value overflows a precision range, the precision range used in a training process of a model, so that a problem of training stagnation or training failure caused by overflow in low-precision training can be effectively resolved. In addition, a requirement for a network mixed precision initialization solution is low, the initialization solution is customized without relying on manual experience, and training precision can be automatically adjusted layer by layer in real time.

For ease of understanding, mainly related terms and concepts in embodiments of this application are first described below.

1. Neural network

The neural network may include a neural unit. The neural unit may be an operation unit that uses $X_s$ and an intercept of b as an input, and an output of the operation unit may be as follows:

$$h_{W,b}(x) = f\left(W^T x\right) = f\left(\sum_{s=1}^{n} W_s x_s + b\right).$$

Herein, s=1, 2, ..., or n, n is a natural number greater than 1, $W_s$ is a weight of $X_s$, and b is a bias of the neural unit. f is an activation function (activation function) of the neural unit, and is used to introduce a non-linear characteristic into the neural network, to convert an input signal in the neural unit into an output signal. The output signal of the activation function may be used as an input of a next layer. The activation function may be a ReLU function. The neural network is a network formed by connecting many single neural units together. To be specific, an output of a neural unit may be an input of another neural unit. An input of each neural unit may be connected to a local receptive field of a previous layer to extract a feature of the local receptive field. The local receptive field may be a region including several neural units.

Work at each layer of the neural network may be described by using a mathematical expression $y = a(Wx + b)$. From a physical perspective, work at each layer of the neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operations 1, 2, and 3 are performed by $Wx$, the operation 4 is performed by $+b$, and the operation 5 is performed by $a()$. The word "space" is used herein for expression because a classified object is not a single thing, but a type of thing. Space is a set of all individuals of this type of thing. $W$ is a weight vector, and each value in the vector represents a weight value of one neuron at this layer of neural network. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, a training process of the neural network is essentially a manner of learning of control of space transformation, and more specifically, learning of a weight matrix.

The neural network, also referred to as an artificial neural network (Artificial Neural Network, ANN), is a dynamic system that is manually established and that uses a directed graph as a topology structure. The neural network processes information by using continuous or discontinuous inputs as a status response, and is an information processing system that aims to simulate a human brain structure and a function of the human brain structure. After decades of development, the artificial neural network has been widely used in many fields, such as pattern recognition, automatic control, signal processing, decision-making assistance, artificial intelligence, and scientific computing, and has achieved extensive success. Generally, a network includes an input layer, a hidden layer, and an output layer.

2. Loss function

In a process of training a neural network, because an output of the neural network is expected to be close, as much as possible, to a predicted value that is really expected, a predicted value of a current network may be compared with a really expected target value, and then a weight matrix of each layer of neural network is updated based on a difference between the two values (certainly, before updating is performed for the first time, there is usually an initialization process, to be specific, a parameter is preconfigured for each layer of the neural network). For example, if the predicted value of the network is large, the weight matrix is adjusted to make the predicted value smaller, and adjustment is continuously performed, until the neural network can obtain the really expected target value through prediction. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

3. Forward propagation (Forward Propagation)

Forward propagation of a neural network is a calculation process from an input layer to a hidden layer and then to an output layer. Starting from the input layer, an output (activation value) of a previous layer is used as an input of a next layer based on a topology structure of the network. An output of each layer is calculated layer by layer until the last output layer. This process is referred to as forward propagation of the network.

4. Backward propagation (Backward Propagation)

Backward propagation of a neural network is short for "error backward propagation", and is a common method for training an artificial neural network in combination with an optimization method (such as gradient descent). This method is used to calculate a gradient of a loss function for all weights in the network. The gradient is fed back to the optimization method to update the weights to minimize the loss function.

5. Computational graph

The computational graph usually uses an arrow to indicate a calculation sequence. For example, using a function $y = 5(a + bc)$ as an example, a value of bc is first calculated, and is stored in a variable i. Then, a+i is calculated, and a+i is stored in a variable j. Then, 5*j is calculated to obtain a calculation result of y.

6. Precision range

The precision range is a precision range of a data type used by a computer. The precision range may be specific precision, or may be a dynamic range of precision. The following uses an example in which a common data type in a neural network is a floating-point (floating point, FP) number for description. In actual application, the data type may alternatively be an integer (int), for example, int8 or int16.

The FP is mainly used to represent a decimal and usually includes three parts: a sign (sign), an exponent (exponent), and a mantissa (mantissa). The sign may be 1 bit (bit) representing positive or negative, and the exponent and the mantissa may be a plurality of bits (bits). Generally, the mantissa represents precision, and the exponent is used to represent a dynamic range (referred to as a precision range in embodiments of this application) that the precision can reach. When a floating-point number represents a decimal, the decimal in a decimal system cannot be accurately converted into a binary number, and the decimal is truncated when being stored in a computer with fixed bits. Therefore, a precision loss may occur when the floating-point number represents the decimal.

A floating-point number may generally include three formats (formats), that is, a half-precision floating-point number, a single-precision floating-point number, and a double-precision floating-point number, which are specifically described below.

Half-precision floating-point (half-precision floating-point) number: is a binary data type used by a computer, occupies 16 bits (that is, 2 bytes) in a computer memory, and may also be referred to as FP16 for short. An absolute value range of a value that can be represented by the half-precision floating-point number is approximately $[6 \times 10^{-8}, 65504]$. Precision of FP16 is $2^{-10}$.

Single-precision floating-point (single-precision floating-point) number: is a binary data type used by a computer, occupies 32 bits (that is, 4 bytes) in a computer memory, and may also be referred to as FP32 for short. An absolute value range of a value that can be represented by the single-precision floating-point number is approximately $[1.4 \times 10^{-45}, 1.7 \times 10^{38}]$. Precision of FP32 is $2^{-23}$.

Double-precision floating-point (double-precision floating-point) number: is a binary data type used by a computer, occupies 64 bits (that is, 8 bytes) in a computer memory, and may also be referred to as FP64 for short. The double-precision floating-point number can represent 15 or 16 significant digits in the decimal system. An absolute value range of a value that can be represented by the double-precision floating-point number is approximately $[2.23 \times 10^{-308}, 1.80 \times 10^{38}]$. Precision of FP32 is $2^{-52}$.

To more intuitively present the foregoing three types of floating-point numbers of different precision, structures of the three types of floating-point numbers are shown in Table 1.

Table 1

| FP | Sign (quantity of bits) | Exponent (quantity of bits) | Mantissa (quantity of bits) |
|---|---|---|---|
| FP16 | 1 | 5 | 10 |
| FP32 | 1 | 8 | 23 |

(continued)

| FP | Sign (quantity of bits) | Exponent (quantity of bits) | Mantissa (quantity of bits) |
|---|---|---|---|
| FP64 | 1 | 11 | 52 |

In the 16 bits occupied by FP16, the sign occupies 1 bit, the exponent occupies 5 bits, and the mantissa occupies 10 bits; in the 32 bits occupied by FP32, the sign occupies 1 bit, the exponent occupies 8 bits, and the mantissa occupies 23 bits; and in the 64 bits occupied by FP64, the sign occupies 1 bit, the exponent occupies 11 bits, and the mantissa occupies 52 bits.

It may be understood that, in actual application, to represent a floating-point number of higher precision, a format of the floating-point number, a storage format that occupies more bits, and the like may be further extended. For example, there is a floating-point number occupying 128 bits (which may be referred to as FP128 for short). This is not specifically limited herein.

7. Overflow

Overflow in embodiments of this application includes overflow and underflow. Overflow means that an absolute value of a calculated value is excessively large and exceeds a maximum value that can be represented by a precision range. Underflow means that an absolute value of a calculated value is excessively small and is less than a positive value that is closest to 0 and that can be represented by a precision range.

Overflow may include storage overflow and calculation overflow. Embodiments of this application are mainly applied to a calculation overflow scenario.

For example, if a first precision range is 1 to 5, it is assumed that values of two parameters are 3, and the two parameters are in the first precision range when being stored. However, parameter calculation may overflow the first precision range. For example, the foregoing two parameters are added, 3+3=6, and 6 is greater than a maximum value 5 that can be represented by the first precision range, that is, a calculated value of the parameters overflows the first precision range. It may be understood that the example does not limit a boundary value of the precision range.

Specifically, FP16 is used as an example to describe an overflow situation. Overflow includes that if a calculated value is a positive number, the calculated value is greater than a maximum positive number that can be represented by FP16; or if a calculated value is a negative number, the calculated value is less than a minimum negative number that can be represented by FP16. Underflow includes that if a calculated value is a positive number, the calculated value is less than a minimum positive number that can be represented by FP16; or if a calculated value is a negative number, the calculated value is greater than a maximum negative number that can be represented by FP16.

8. Mixed precision (Mixed Precision, MP)

Currently, most models are trained by using the 32-bit single-precision floating-point number (FP32). In a mixed precision training method, model training is performed by using half-precision or even lower-precision and single-precision, thereby reducing memory required for model training. In addition, because a low-precision operation is faster than a single-precision operation, hardware efficiency is further improved.

It can be learned from the foregoing that a key point of mixed precision is a policy for setting which part of a network to be trained by using high precision and which part to be trained by using low precision, to ensure precision and improve training efficiency. In other words, the key point of mixed precision is how to specifically combine single precision and high precision for training.

Currently, the mixed precision training method mainly includes the following two manners.

In a first manner, calculation precision is specified based on a type of each layer in a neural network. Some types of layers use high precision for calculation, and some types of layers use low precision for calculation.

In a second manner, precision is dynamically selected by determining whether a quantization error exceeds a threshold. The quantization error may be measured at different points in a network or measured over time as training is performed. For example, the quantization error is calculated by comparing a training result with a baseline value. The baseline value may be determined by using various methods, for example, training a same network by using full-precision floating-point values, repeatedly calculating a subset by using high precision, and analyzing or sampling data statistics for related calculation.

However, in the first manner, layers of a same type have different requirements for calculation precision in different networks or in different training phases of a same network. Therefore, it is clearly not flexible or intelligent enough to specify precision applicable to calculation based on the type.

In the second manner, adjustment of training precision relies on a precision baseline value. The baseline value needs to be repeatedly calculated by using high precision or obtained by training a same network by using full-precision floating-point values. This makes the solution still not automated enough and may significantly increase an amount of calculation for network training due to construction of the baseline value. This is contrary to a purpose of using low-precision training to reduce calculation and accelerate training.

In view of this, embodiments of this application provide a model training method and a related device, to adjust, in real time when a calculated value of a parameter in a neural network overflows a precision range, the precision range used in a training process of a model, so that training stagnation caused by overflow in low-precision training in a conventional technology can be effectively resolved. In addition, a requirement for a network mixed precision initialization solution is low, the initialization solution is customized without relying on manual experience (for example, no manual experience is required to perform precision adjustment at different layers of each network), and training precision can be automatically adjusted layer by layer in real time in a training process based on whether overflow occurs.

With reference to accompanying drawings, the following describes in detail the model training method and the related device that are provided in embodiments of this application.

A system architecture provided in embodiments of this application is first described.

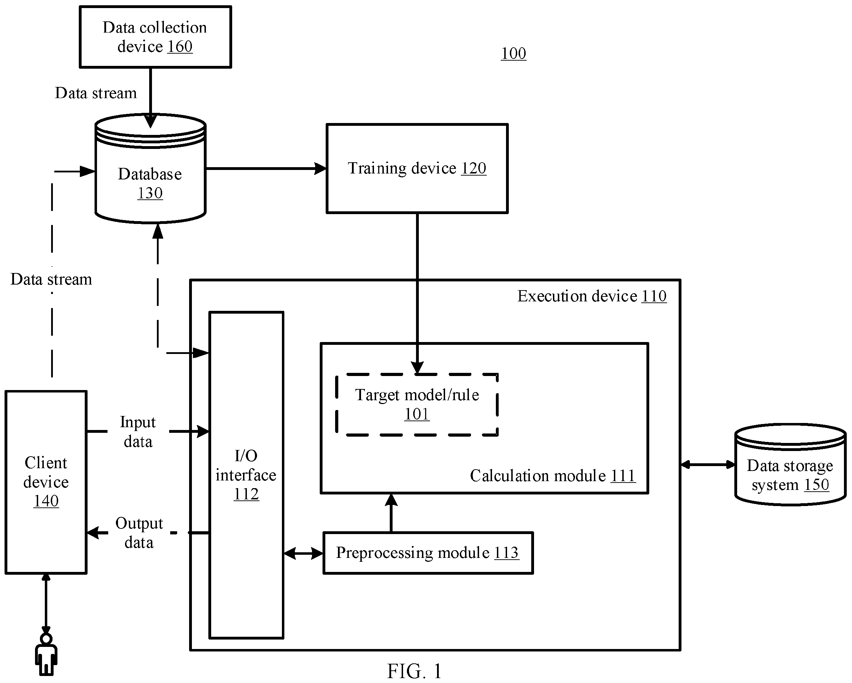

Refer to FIG. 1. An embodiment of the present invention provides a system architecture 100. As shown in the system architecture 100, a data collection device 160 is configured to collect training data. The training data in this embodiment of this application may include one or more of the following: an image, a voice, a text, and the like. The training data is stored in a database 130, and a training device 120 obtains a target model/rule 101 through training based on the training data maintained in the database 130. The target model/rule 101 can be used to implement a computer vision task (for example, classification, segmentation, detection, and image generation). The target model/rule 101 in this embodiment of this application may be specifically a neural network or the like. It should be noted that, in actual application, the training data maintained in the database 130 is not necessarily collected by the data collection device 160, but may be received from another device. In addition, it should be noted that the training device 120 trains the target model/rule 101 not necessarily completely based on the training data maintained in the database 130, and may obtain training data from a cloud or another place to perform model training. The foregoing descriptions should not be construed as a limitation on this embodiment of this application.

The target model/rule 101 obtained through training by the training device 120 may be applied to different systems or devices, for example, applied to an execution device 110 shown in FIG. 1. The execution device 110 may be a terminal, for example, a mobile phone terminal, a tablet computer, a notebook computer, an augmented reality (augmented reality, AR) device/virtual reality (virtual reality, VR) device, or a vehicle-mounted terminal. Certainly, the execution device 110 may alternatively be a server, a cloud, or the like. In FIG. 1, an I/O interface 112 is configured for the execution device 110, and is configured to exchange data with an external device. A user may input data into the I/O interface 112 by using a client device 140. The input data corresponds to training data. The input data in this embodiment of this application may also include one or more of the following: an image, a voice, a text, and the like. In addition, the input data may be entered by the user, or may be uploaded by the user by using a photographing device, or certainly may be from a database or the like. This is not specifically limited herein.

A preprocessing module 113 is configured to perform preprocessing (for example, segmentation, selection, and transformation) based on the input data received by the I/O interface 112. For example, the input data is segmented to obtain a plurality of data blocks (patches).

In a related processing procedure in which the execution device 110 preprocesses the input data or a calculation module 111 of the execution device 110 performs calculation, the execution device 110 may invoke data, code, and the like in a data storage system 150 to implement corresponding processing, or may store, into the data storage system 150, data, an instruction, and the like obtained through corresponding processing.

Finally, the I/O interface 112 returns a processing result (for example, a classification result, a segmentation result, or a detection result) to the client device 140, to provide the processing result to the user.

It should be noted that the training device 120 may generate corresponding target models/rules 101 for different targets or different tasks based on different training data. The corresponding target models/rules 101 may be used to achieve the foregoing targets or complete the foregoing tasks, to provide a needed result for the user.

In a case shown in FIG. 1, the user may manually provide input data. The input data may be manually provided by using a screen provided by using the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input into the I/O interface 112 and an output value output from the I/O interface 112 that are shown in the figure, and store the new sample data in the database 130. Certainly, the client device 140 may alternatively not perform collection. Instead, the I/O interface 112 directly stores, in the database 130 as new sample data, the input data input into the I/O interface 112 and the output value output from the I/O interface 112 that are shown in the figure.

It should be noted that FIG. 1 is merely a diagram of a system architecture according to an embodiment of the present invention. A position relationship between a device, a component, a module, and the like shown in the figure constitutes no limitation. For example, in FIG. 1, the data storage system 150 is an external memory relative to the execution device 110. In another case, the data storage system 150 may alternatively be disposed in the execution device 110.

The following describes a hardware structure of a chip provided in embodiments of this application.

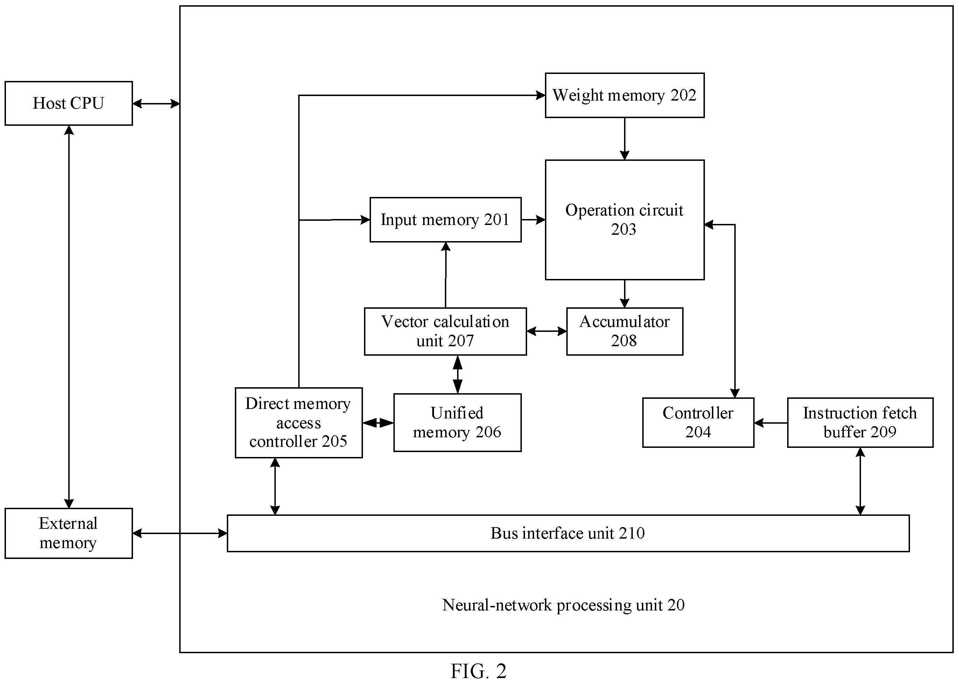

FIG. 2 shows a hardware structure of a chip according to an embodiment of the present invention. The chip includes a neural-network processing unit 20. The chip may be disposed in the execution device 110 shown in FIG. 1, and is configured to complete calculation work of the calculation module 111. The chip may alternatively be disposed in the training device 120 shown in FIG. 1, and is configured to complete training work of the training device 120 and output the target model/rule 101.

The neural-network processing unit 20 may be any processor suitable for large-scale exclusive OR operation processing, for example, a neural-network processing unit (neural-network processing unit, NPU), a tensor processing unit (tensor processing unit, TPU), or a graphics processing unit (graphics processing unit, GPU). The NPU is used as an example. The neural-network processing unit 20 serves as a coprocessor, and is mounted on a host central processing unit (central processing unit, CPU) (host CPU). The host CPU assigns a task. A core part of the NPU is an operation circuit 203, and a controller 204 controls the operation circuit 203 to extract data in a memory (a weight memory or an input memory) and perform an operation.

In some implementations, the operation circuit 203 includes a plurality of processing engines (processing engines, PEs). In some implementations, the operation circuit 203 is a two-dimensional systolic array. The operation circuit 203 may alternatively be a one-dimensional systolic array or another electronic circuit that can perform arithmetical operations such as multiplication and addition. In some implementations, the operation circuit 203 is a general-purpose matrix processor.

For example, it is assumed that there is an input matrix A, a weight matrix B, and an output matrix C. The operation circuit 203 fetches data corresponding to the matrix B from a weight memory 202, and buffers the data on each PE in the operation circuit. The operation circuit fetches data of the matrix A from an input memory 201, to perform a matrix operation with the matrix B, and stores an obtained partial result or an obtained final result of the matrix in an accumulator 208.

A vector calculation unit 207 may perform further processing such as vector multiplication, vector addition, an exponent operation, a logarithm operation, or value comparison on an output of the operation circuit. For example, the vector calculation unit 207 may be configured to perform network calculation like pooling (Pooling), batch normalization (Batch Normalization), or local response normalization (Local Response Normalization), at a non-convolutional/non-FC layer in a neural network.

In some implementations, the vector calculation unit 207 can store, in a unified memory 206, an output vector that has been processed. For example, the vector calculation unit 207 may apply a non-linear function to the output of the operation circuit 203, for example, a vector of an accumulated value, to generate an activation value. In some implementations, the vector calculation unit 207 generates a normalized value, a combined value, or both. In some implementations, the output vector that has been processed can be used as an activation input of the operation circuit 203, for example, used at a subsequent layer in the neural network.

The unified memory 206 is configured to store input data and output data.

For weight data, a direct memory access controller (direct memory access controller, DMAC) 205 transfers input data in an external memory into the input memory 201 and/or the unified memory 206, stores weight data in the external memory into the weight memory 202, and stores data in the unified memory 206 into the external memory.

A bus interface unit (bus interface unit, BIU) 210 is configured to implement interaction between the host CPU, the DMAC, and an instruction fetch buffer 209 through a bus.

The instruction fetch buffer (instruction fetch buffer) 209 connected to the controller 204 is configured to store instructions to be used by the controller 204.

The controller 204 is configured to invoke the instructions buffered in the instruction fetch buffer 209, to control a working process of the operation accelerator.

Generally, the unified memory 206, the input memory 201, the weight memory 202, and the instruction fetch buffer 209 each are an on-chip (On-Chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

The following describes in detail the model training method and a data processing method in embodiments of this application with reference to accompanying drawings.

First, an application scenario of the model training method provided in embodiments of this application is described. The method is applicable to a dynamic computational graph scenario, and is also applicable to a static computational graph scenario. The dynamic computational graph scenario may be understood as updating a computational graph after a network structure of each layer of a model is calculated. The static computational graph scenario may be understood as updating a computational graph after network structures of all layers of a model are calculated. A main difference is an updating occasion of a computational graph. Calculation of a computational graph is applicable to the model training method (or referred to as a calculation precision adjustment method) provided in embodiments of this application.

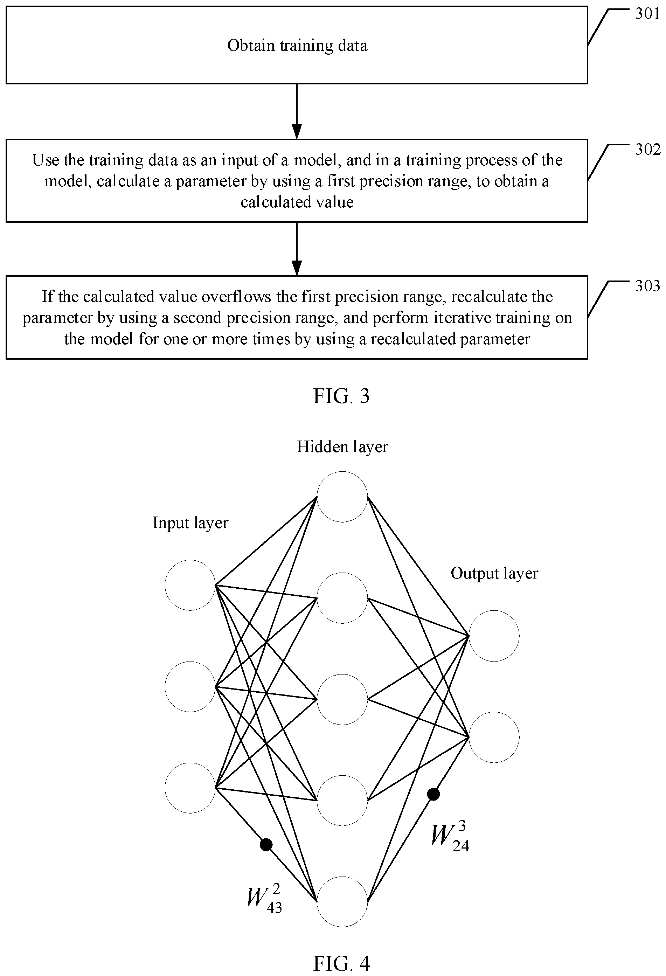

The following describes in detail the model training method in embodiments of this application with reference to FIG. 3. The method may be performed by a training device, or may be performed by a component (for example, a processor, a chip, or a chip system) of the training device. The training device may be a cloud device, or may be a terminal device. For example, the training device may be a device, such as a computer or a server, that has a robust computing capability to perform the model training method, or may be a system including a cloud device and a terminal device. For example, the training method may be performed by the training device 120 in FIG. 1 and the neural-network processing unit 20 in FIG. 2.

Optionally, the model training method may be processed by a CPU, or may be processed by both a CPU and a GPU; or no GPU may be used, but another processor suitable for neural network calculation is used. This is not limited in this application.

FIG. 3 is a schematic flowchart of a model training method according to an embodiment of this application. The method may include step 301 to step 303. The following describes step 301 to step 303 in detail.

Step 301: Obtain training data.

In this embodiment of this application, a training device may obtain training data in a plurality of manners. The training data may be sent by and received from another device (for example, a server or a service device), may be selected from a database, may be photographed by a user, or may be obtained in another manner. This is not specifically limited herein.

The training data in this embodiment of this application may include one or more of the following: an image, a voice, a text, and the like. The training data is specifically related to a scenario to which a model is applied. For example, when a function of the model is audio recognition, a specific form of the training data may be audio data or the like. For another example, when a function of the model is image classification, a specific form of the training data may be image data or the like. For another example, when a function of the model is to predict a voice, a specific form of the training data may be text data or the like. It may be understood that the foregoing several cases are merely examples, and are not necessarily in a one-to-one correspondence. For example, for audio recognition, the specific form of the training data may be image data, text data, or the like (for example, if the model is applied to a scenario of viewing an image and playing a voice in an education field, a function of the model is to recognize a voice corresponding to an image, and the specific form of the training data may be image data). In actual application, there is another scenario. For example, when the model is applied to a movie recommendation scenario, the training data may be a word vector or the like corresponding to a movie. In some application scenarios, the training data may alternatively simultaneously include data in different modalities. For example, in an automated driving scenario, the training data may include image/video data collected by a camera, and may further include voice/text data or the like for sending an instruction by a user. A specific form or type of the training data is not limited in this embodiment of this application.

It may be understood that if training of the model is supervised training, the training data obtained in this step is training data that carries a label. If training of the model is unsupervised training, the training data obtained in this step is training data that does not carry a label.

Step 302: Use the training data as an input of a model, and in a training process of the model, calculate a parameter by using a first precision range, to obtain a calculated value.

After obtaining the training data, the training device uses the training data as the input of the model, and calculates the parameter by using the first precision range, to obtain the calculated value. The parameter is related to a loss function of the model. For supervised training, the loss function is used to represent a difference between an output of the model and a label to which the training data belongs. For unsupervised training, the loss function may be a user-defined function. For example, when a task of the model is a classification task, the loss function is used to represent a difference between an output and an input (or a clustering result or the like) of the model. Alternatively, it is understood that, in unsupervised training, it is expected that an output of the model can be restored to an input of the model. For example, a label is training data (that is, an output obtained by the model is sent to another network to restore the training data). It may be understood that the loss function is not limited in this embodiment of this application. The loss function may also be understood as an optimization target function of the model, and may be specifically set based on an actual requirement.

The parameter in this embodiment of this application may include one or more of the following possibilities: The parameter is related to the loss function of the model, the parameter is related to calculation of the model in a forward propagation process, and the parameter is related to calculation of the model in a backward propagation process.

Optionally, the model includes a plurality of network structures. In addition, the model in this embodiment of this application is specifically an artificial neural network. A specific quantity of layers or a specific structure included in the artificial neural network may be set based on an actual requirement. This is not limited herein.

A precision range (for example, the first precision range and a second precision range) in this embodiment of this application may be a precision range of a data type (for example, int or float). For ease of subsequent description, in this embodiment of this application, only an example in which the precision range is an FP precision range is used for description. Certainly, in actual application, the precision range may alternatively be a precision range of another data type (for example, int).

Optionally, the first precision range is a dynamic reachable range of FP16 precision. For descriptions of FP16 and the precision range, refer to the explanations in the foregoing related term. Details are not described herein.

In this embodiment of this application, precision ranges used by network structures of all layers of the model may be the same or different. In other words, the first precision range may be a precision range refined to each layer of the model, or may be a same precision range used by all layers of the model. That is, subsequent use of the second precision range to replace the first precision range for parameter recalculation may be precision range adjustment of a layer granularity (that is, only a precision range of a specific layer is adjusted, a precision range of a non-specific layer is not adjusted, and the specific layer may also become an overflow layer), or may be precision range adjustment of the entire model (that is, all layers).

In a possible implementation, the network structures of all layers of the model use a same precision range, and in this case, the first precision range is the same precision range. Alternatively, it is understood that this embodiment of this application is applicable to a training scenario using single precision.

In another possible implementation, at least two layers of network structures in the model use different precision ranges. For example, the model is trained by using mixed precision. In this case, the first precision range is low precision or high precision in the mixed precision. Generally, for mixed precision training, a probability of an overflow problem of high precision is relatively low by default, and the first precision range may be specifically a range of low precision in the mixed precision. Alternatively, it is understood that this embodiment of this application is applicable to a training scenario using mixed precision. That is, precision adjustment is subsequently performed only on a specific layer.

In this embodiment of this application, the parameter has a plurality of cases. The following separately describes the cases.

In a first case, the parameter is a parameter in the forward propagation process.

In this manner, the parameter may be an intermediate feature or a value of a loss function, calculated by a plurality of network structures in the forward propagation process. The intermediate feature may also be understood as an activation value obtained by using an activation function by the plurality of network structures. The value of the loss function may also be understood as a difference value that is between a model output and a label and that is calculated by the network structures of all layers after forward propagation ends.

For example, a model shown in FIG. 4 is used as an example. The model includes three layers of network structures, which are respectively an input layer (including three neurons), a hidden layer (including four neurons), and an output layer (including two neurons). $W_{ij}^{l}$ is a weight of a $j^{th}$ neuron at an $(l\text{-}1)^{th}$ layer to an $i^{th}$ neuron at an $l^{th}$ layer (for example, $W_{43}^{2}$ is a weight of a third neuron at a first layer to a fourth neuron at a second layer), $b_{j}^{l}$ is a bias of a $j^{th}$ neuron at the $l^{th}$ layer, and $a_{j}^{l}$ is an activation value of the $j^{th}$ neuron at the $l^{th}$ layer. The forward propagation process may be shown in a formula 1 and a formula 2, and the formula 2 is a matrix form of the formula 1.

$$\text{Formula 1: } a_{j}^{l} = \sigma\left(\sum_{i} W_{ij}^{l} a_{i}^{l-1} + b_{j}^{l}\right).$$

$$\text{Formula 2: } a^{l} = \sigma\left(W^{l} a^{l-1} + b^{l}\right).$$

Herein, $\sigma$ is an activation function.

An activation value may be calculated layer by layer by using the formula 2, and finally, an output f(x) of the model may be obtained based on an input X. The value of the loss function is calculated based on a difference between the output f(x) of the model and a label value Y of X. The loss function may be a mean square error (Mean Square Error, MSE) loss, a square absolute error loss, a cross-entropy loss, a hinge loss, or the like, and may be specifically set based on an actual requirement. A structure of the loss function is not limited.

It may be understood that the model structure shown in FIG. 4 is merely an example, and does not constitute a limitation on the model mentioned in this embodiment of this application. In addition, the formula 1 and the formula 2 are merely examples of an expression form in the forward propagation process. In actual application, the forward propagation process may alternatively have another expression form. This is not specifically limited herein.

In the foregoing example, the parameter may include the intermediate feature and/or the value of the loss function. $a^l$ calculated at each layer may be understood as the intermediate feature, and the difference between f(x) and Y is the value of the loss function.

In a second case, the parameter is a parameter in the backward propagation process.

In this manner, the parameter may be a gradient calculated by a plurality of network structures in the backward propagation process. The gradient includes one or more of the following: a gradient of an intermediate feature, a gradient of a weight in the model, a gradient of a loss, and the like.

The backward propagation process may be understood as a process of continuously adjusting a weight by using a value of a loss function.

For example, the foregoing example continues, and the backward propagation process may include obtaining an optimal parameter (for example, a weight $W_{ij}^l$ ) by minimizing the loss function by using an optimizer and a preset learning rate. Specifically, the loss function and a chain criterion may be used to calculate a partial derivative of the weight, and the partial derivative reflects the gradient.

It may be understood that the foregoing two cases of the parameter are merely examples. In actual application, the parameter may alternatively have another case. This is not specifically limited herein.

Step 303: If the calculated value overflows the first precision range, recalculate the parameter by using a second precision range, and perform iterative training on the model for one or more times by using a recalculated parameter.

If the calculated value obtained by the training device by calculating the parameter by using the first precision range in step 302 overflows the first precision range, the parameter is recalculated by using the second precision range, and iterative training is performed on the model for one or more times by using the recalculated parameter. The second precision range includes the first precision range, or the second precision range partially overlaps the first precision range.

Compared with a conventional technology in which if precision overflow occurs in an iteration, training data used in overflow is discarded, and a problem of training stagnation is caused, the method provided in this embodiment of this application can make training continue by adjusting a precision range in a timely manner, so that model training efficiency can be improved.

In this embodiment of this application, the second precision range includes the first precision range, or the second precision range partially overlaps the first precision range.

For example, the second precision range includes the first precision range. An example in which the first precision range is FP16 and the second precision range is FP32 is used. The first precision range may be (-65504, 65504), and the second precision range may be [$-1.7 \times 10^{38}, 1.7 \times 10^{38}$].

For example, the second precision range partially overlaps the first precision range. An example in which the first precision range is FP16 and the second precision range is int16 is used. The first precision range is (-65504, 65504), and the second precision range may be integers from -32768 to 32767.

It may be understood that the example does not limit a boundary value of the precision range.

Optionally, the first precision range and the second precision range may alternatively be concepts of relative high and low ranges. If the first precision range is a high-precision range (referred to as high precision in the following), the second precision range is a low-precision range (referred to as low precision in the following). If the first precision range is low precision, the second precision range is high precision. Generally, an overflow problem occurs in low precision.

In this embodiment of this application, only an example in which the first precision range is low precision and the second precision range is high precision is used for description. Certainly, in actual application, adjustment between high precision and low precision or adjustment from low precision to high precision may also be implemented by using the method provided in this embodiment of this application.

Further, recalculation of the parameter by using the second precision range may include a plurality of cases, and the parameter may be recalculated by using the second precision range, starting from a network structure of a first layer of the model. Alternatively, the parameter may be recalculated by using the second precision range, starting from a current network structure in which the calculated value overflows. This is not specifically limited herein.

In a possible implementation, when the parameter includes the intermediate feature calculated in the forward propagation process, the foregoing step of recalculating the parameter by using a second precision range specifically includes: using the second precision range to calculate the intermediate feature of an overflow layer or calculate the intermediate feature layer by layer starting from the network structure of the first layer, where the overflow layer is a network structure that is in the plurality of network structures and in which a calculated value of the intermediate feature overflows the first precision range.

In another possible implementation, when the parameter includes the value of the loss function of the model, the foregoing step of recalculating the parameter by using a second precision range specifically includes: using the second precision range to calculate the value of the loss function or perform calculation layer by layer starting from the network structure of the first layer, until the value of the loss function is obtained.

For example, the model includes five layers of network structures. If a calculated value obtained by performing parameter calculation of a fourth layer by using the first precision range overflows the first precision range, the second precision range may be used to perform recalculation from a first layer to the fourth layer. Alternatively, the second precision range may be used to recalculate a parameter of the fourth layer.

Optionally, when the parameter includes the gradient, the calculated value is a value obtained by dividing the gradient by a scaling coefficient, and the scaling coefficient is used to reduce a probability that the gradient overflows. The method further includes: updating the scaling coefficient by using a first coefficient, where an updated scaling coefficient is used to replace the scaling coefficient that is not updated, to perform next iterative training of the model, and the first coefficient is a positive number less than 1.

For the overflow, refer to the description in the foregoing related term. Details are not described herein. That the calculated value overflows the first precision range may also be understood as that the calculated value of the parameter cannot be accurately represented by using the first precision range. This may cause a subsequent rounding error, or an overflow error caused by a narrow precision range.

If the calculated value of the parameter overflows the first precision range, the parameter is recalculated by using the second precision range different from the first precision range, and iterative training is performed on the model for one or more times by using an updated parameter. For a specific training process, refer to the descriptions in the forward propagation process and the backward propagation process. For example, the loss function in forward propagation is calculated by using the parameter calculated by using the second precision range. Iterative training is performed on the model for one or more times to achieve a target that the value of the loss function is less than a threshold, to obtain a trained model.

It should be noted that, as described in step 302, recalculation using the second precision range may be precision range adjustment of a layer granularity, or may be precision range adjustment of the entire model (that is, all layers). That is, if calculation precision of all layers is initialized to a same precision range, the recalculation in this step is for all layers (or understood as calculation precision adjustment for all layers). If the calculation precision of all layers is initialized to different precision ranges (that is, mixed precision calculation), the recalculation in this step is for a specific layer (or understood as calculation precision adjustment for the specific layer). Calculation precision of the specific layer overflows the first precision range.

In addition, step 301 to step 303 in this embodiment may be performed for one or more times, and step 301 to step 303 may be performed once after updating is performed for one or more times in the training process of the model. Alternatively, step 301 to step 303 may be performed again when a preset cycle or a preset quantity of times is met.

In this embodiment of this application, when the calculated value of the parameter overflows the first precision range in the training process of the model, the parameter is recalculated by using the second precision range. That is, the precision range is automatically adjusted in real time by using overflow information of the calculated value of the parameter, so that memory occupied by model training can be reduced, and model training efficiency can be improved. In this way, problems such as training stagnation that are caused because the parameter calculation overflows the first precision range are reduced. In addition, in this embodiment of this application, compared with a method in a conventional technology in which a type of a network layer of a model needs to be used to determine whether to use a high-precision floating-point number or a low-precision floating-point number, a precision range to which a parameter is applicable may be adjusted in real time by using overflow information of the parameter, and an overflow problem caused by calculation of a low-precision floating-point number is reduced.

Optionally, in the embodiment shown in FIG. 3, if the calculated value of the parameter does not overflow the first precision range, the value of the loss function obtained in the forward propagation process is multiplied by the scaling coefficient, and the gradient calculation in the backward propagation process is performed by using the first precision range. If the value obtained by dividing the gradient by the scaling coefficient overflows the first precision range, the scaling coefficient is updated by using the first coefficient, and recalculation is performed in the forward propagation process and the backward propagation process by using the second precision range. The first coefficient is a positive number less than 1, and an updated scaling coefficient is used to replace the scaling coefficient that is not updated, to perform next iterative training of the model.

To reduce a risk of subsequent parameter precision underflow, a lower limit of a value of the scaling factor may be limited. For example, a minimum value of the scaling coefficient is a preset threshold greater than or equal to 1.

Optionally, because an initial precision range (for example, the first precision range) may be set for the model in a first iteration process, to improve efficiency of the model in a subsequent iteration, an initial precision range of each iteration may be adjusted based on a quantity of iterations and a quantity of overflow times.

Specifically, in an $N^{th}$ iteration in the training process of the model, a quantity of overflow times of the plurality of network structures in the model based on the first precision range is obtained, where N is a positive integer greater than or equal to 1. If the quantity of overflow times is greater than or equal to a second threshold, it is determined that an initial precision range in a next iterative training process is to be changed from the first precision range to the second precision range, and the quantity of overflow times is cleared to zero. The quantity of overflow times includes: a quantity of overflow times of the plurality of network structures in the forward propagation process, and/or a quantity of overflow times of the plurality of network structures in the backward propagation process.

In addition, the parameter in the embodiment shown in FIG. 3 has a plurality of cases. In a possible implementation, if the parameter is an intermediate feature, and calculation of the intermediate feature overflows the first precision range, the second precision range may be used to recalculate the intermediate feature, and the second precision range may be further used to perform subsequent loss calculation and/or weight gradient calculation. In other words, calculation precision adjustment may be precision range adjustment for the overflow parameter, and may further be calculation precision range adjustment for another parameter in a subsequent training process. This is not specifically limited herein. In another possible implementation, if the parameter is a loss, and calculation of the loss overflows the first precision range, the second precision range may be used to recalculate the loss (including recalculation of the loss by using the second precision range, or recalculation starting from the first layer until the loss is obtained, that is, a recalculation range may include a current calculation, or may include a plurality of calculations before a current overflow calculation), and the second precision range may be further used to perform subsequent weight gradient calculation. In other words, when a parameter calculated in an intermediate calculation overflows the precision range in the training process, calculation precision adjustment may be precision range adjustment for the overflow parameter, may further be precision range adjustment for a parameter that does not overflow in the training process and that is before the overflow parameter, and may further be calculation precision range adjustment for another parameter in a subsequent training process. This is not specifically limited herein.

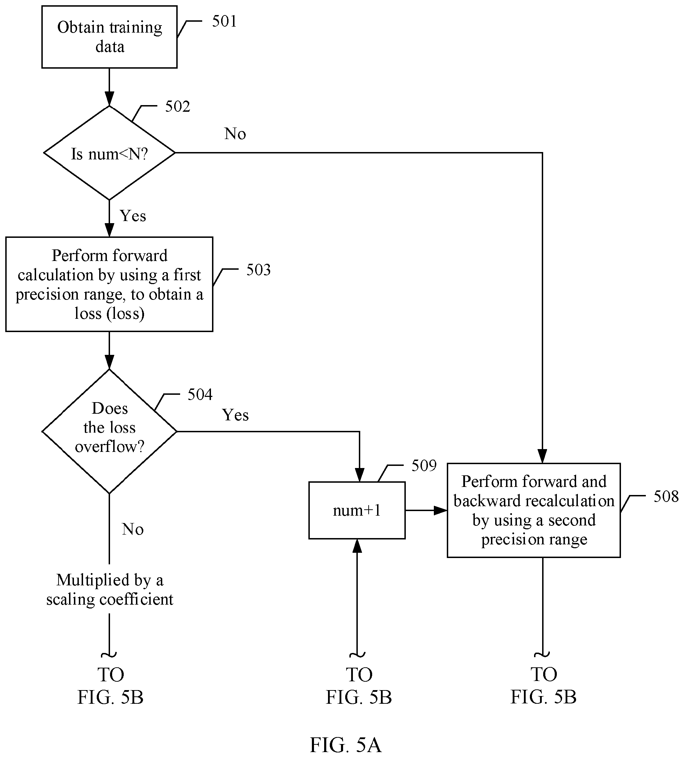

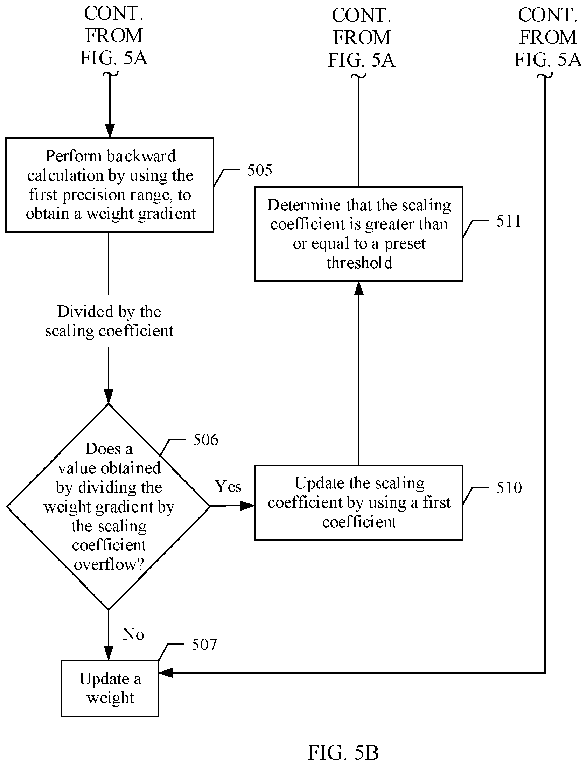

FIG. 5A and FIG. 5B show another model training method according to an embodiment of this application. An execution body of the method is similar to the execution body of the embodiment shown in FIG. 3, and details are not described herein. The method may include step 501 to step 511. The following describes step 501 to step 511 in detail.

Step 501: Obtain training data.

For step 501, refer to the description of step 301 in the embodiment shown in FIG. 3. Details are not described herein.

Step 502: Determine whether a quantity of overflow times (num) is greater than or equal to a second threshold (N). If the quantity of overflow times is greater than or equal to the second threshold, step 503 is to be performed. If the quantity of overflow times is less than the second threshold, step 508 is to be performed.

In this embodiment of this application, only an example in which the quantity of overflow times includes a quantity of times that a calculated value of each layer overflows a first precision range in a forward calculation process and a backward calculation process of a model is used for description. It may be understood that, in actual application, the quantity of overflow times may be a quantity of times that an intermediate feature of each layer overflows the first precision range in forward calculation of the model, or may be a quantity of times that a gradient overflows the first precision range in backward calculation of the model. That is, the quantity of overflow times may be a count in an overall forward and backward process, or may be a separate count in a forward or backward process. This is not specifically limited herein.

In this embodiment of this application, forward calculation is calculation of a parameter (for example, an intermediate feature or a loss) in a forward propagation process of the model. Backward calculation is calculation of a parameter (for example, a gradient) in a backward propagation process of the model.

A training device determines whether the quantity of overflow times is greater than or equal to the second threshold (N), where N is an integer greater than or equal to 0. If the quantity of overflow times is greater than or equal to the second threshold, step 503 is to be performed. If the quantity of overflow times is less than the second threshold, step 508 is to be performed.

It may be understood that, initially, the quantity num of overflow times is set to 0.

Step 503: Perform forward calculation by using a first precision range, to obtain a loss (loss).

If the quantity of overflow times in step 502 is greater than or equal to the second threshold, execution of this step is triggered.

For calculation of the loss in step 503, refer to the description of step 302 in the embodiment shown in FIG. 3. Details are not described herein.

Step 504: Determine whether the loss overflows. If the loss overflows, step 509 is to be performed. If the loss does not overflow, the loss is multiplied by a scaling coefficient, and step 505 is to be performed.

After obtaining the loss, the training device determines whether the loss overflows. If the loss overflows, step 509 is to be performed. If the loss does not overflow, the loss is multiplied by the scaling coefficient, and step 505 is to be performed.

Step 505: Perform backward calculation by using the first precision range, to obtain a weight gradient.

If the loss in step 504 does not overflow the first precision range, the loss is multiplied by the scaling coefficient, and execution of this step is triggered.

Step 505 is performed through multiplication by the scaling coefficient, to prevent underflow of a calculated value.

For a description of calculating the weight gradient in step 505, refer to the description of step 302 in the embodiment shown in FIG. 3. Details are not described herein.

Step 506: Determine whether a value obtained by dividing the weight gradient by the scaling coefficient overflows. If the value obtained by dividing the weight gradient by the scaling coefficient overflows, step 510 is to be performed. If the value obtained by dividing the weight gradient by the scaling coefficient does not overflow, step 507 is to be performed.

After obtaining the weight gradient, the training device determines whether the value obtained by dividing the weight gradient by the scaling coefficient overflows the first precision range. If the value obtained by dividing the weight gradient by the scaling coefficient overflows, step 510 is to be performed. If the value obtained by dividing the weight gradient by the scaling coefficient does not overflow, step 507 is to be performed.

Step 507: Update a weight.

If the value obtained by dividing the weight gradient by the scaling coefficient in step 506 does not overflow the first precision range, and/or after step 508, execution of this step is triggered.

Alternatively, it is understood that, if the value obtained by dividing the weight gradient by the scaling coefficient does not overflow the first precision range, the value is used to perform iterative updating on the weight.

Step 508: Perform forward and backward recalculation by using a second precision range.

If the quantity of overflow times in step 502 is less than the second threshold, and/or after step 509, execution of this step is triggered.

For step 508, refer to the description of step 303 in the embodiment shown in FIG. 3. Details are not described herein.

Step 509: Increase the quantity of overflow times by 1 (that is, num+1).

If the loss in step 504 overflows the first precision range, and/or the value obtained by dividing the weight gradient by the scaling coefficient overflows the first precision range, execution of this step is triggered.

Alternatively, it is understood that the quantity of overflow times is recorded, to determine, in a subsequent iteration and based on comparison between the quantity of overflow times and the second threshold, whether to modify an initial precision range in each iteration process. For example, if the quantity of overflow times is greater than the second threshold, the initial precision range is to be adjusted from the first precision range to the second precision range. Certainly, in addition to the quantity of overflow times, a quantity of iterations may also be considered for adjustment of the initial precision range. For example, the quantity of iterations reaches 1000, and the quantity of overflow times is greater than 800 (that is, the second threshold is 800). In this case, it indicates that setting the initial precision range to the first precision range has affected model training. To ensure accuracy of subsequent model training, the initial precision range is adjusted to the second precision range, to reduce problems such as training stagnation that are caused because the parameter overflows the first precision range.

Step 510: Update the scaling coefficient by using a first coefficient.

If the value obtained by dividing the weight gradient by the scaling coefficient in step 506 overflows the first precision range, execution of this step is triggered. If the value obtained by dividing the weight gradient by the scaling coefficient overflows the first precision range, the scaling coefficient is updated by using the first coefficient. The first coefficient is a positive number less than 1.

Alternatively, it is understood that, if the value obtained by dividing the weight gradient by the scaling coefficient overflows the first precision range, the scaling coefficient is multiplied by a positive number less than 1 for adjustment.

Step 511: Determine that the scaling coefficient is greater than or equal to a preset threshold.

After determining that the value obtained by dividing the weight gradient by the scaling coefficient overflows the first precision range, the training device may determine whether the scaling coefficient is less than the preset threshold, when updating the scaling coefficient by using the first coefficient. If the scaling coefficient is less than the preset threshold, the scaling coefficient is adjusted to the preset threshold. If the scaling coefficient is greater than or equal to the preset threshold, the scaling coefficient is not modified, and step 509 is to be performed.

In this step, a lower limit of a value of the scaling coefficient is limited, so that a risk of subsequent parameter underflow can be reduced, and stability of model training can be improved.

It may be understood that the setting the lower limit of the value of the adjusted scaling coefficient is for a next iteration. After the scaling coefficient is adjusted, step 509 is to be performed.

In addition, step 501 to step 511 in this embodiment may be performed for a plurality of times, and step 501 to step 511 may be performed once after updating is performed for one or more times in a training process of a model. Alternatively, step 501 to step 511 may be performed again when a preset cycle or a preset quantity of times is met.

In this embodiment of this application, on the one hand, the precision range is automatically adjusted in real time by using overflow information generated in the forward calculation process and/or the backward calculation process, so that memory occupied by model training can be reduced, and model training efficiency can be improved. In this way, problems such as training stagnation that are caused because the parameter calculation overflows the first precision range are reduced. In addition, in this embodiment of this application, compared with a method in a conventional technology in which a type of a network layer of a model needs to be used to determine whether to use a high-precision floating-point number or a low-precision floating-point number, a precision range to which a parameter is applicable may be adjusted in real time by using overflow information of the parameter, and an overflow problem caused by calculation of a low-precision floating-point number is reduced. On the other hand, the initial precision range may be adjusted, and when the first precision range affects training of the model, the initial precision range is adjusted from the first precision range to the second precision range, to ensure accuracy of subsequent model training. On the other hand, in the backward calculation process, the lower limit of the value of the scaling coefficient is set, to reduce a risk of subsequent parameter precision underflow.

It may be understood that, in the embodiment shown in FIG. 5A and FIG. 5B, there are a plurality of ways of processing after forward calculation overflows. For example, if forward calculation overflows, the second precision range may be used to perform forward calculation again, and the first precision range is used to perform backward calculation. For example, if forward calculation overflows, the second precision range may be used to perform forward calculation again and perform subsequent backward calculation. That is, precision adjustment may be adjustment only for overflow calculation, or may be precision adjustment for overall calculation. This is not specifically limited herein.

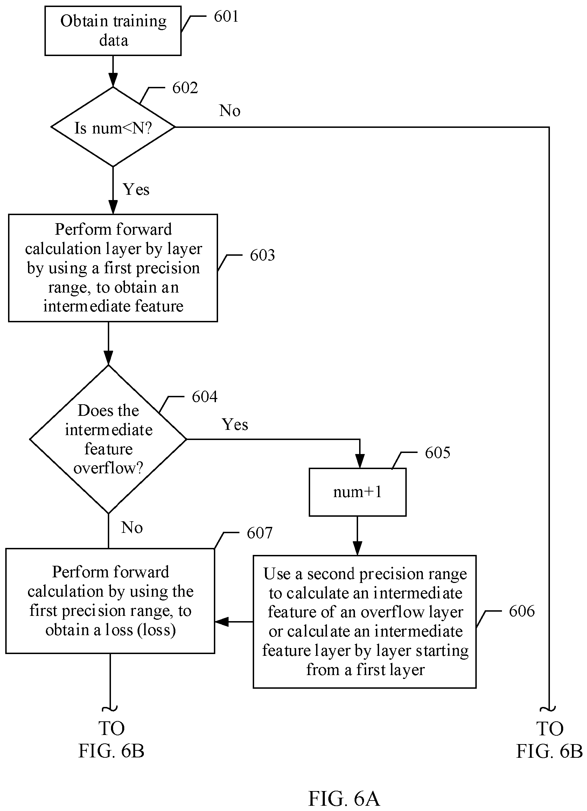

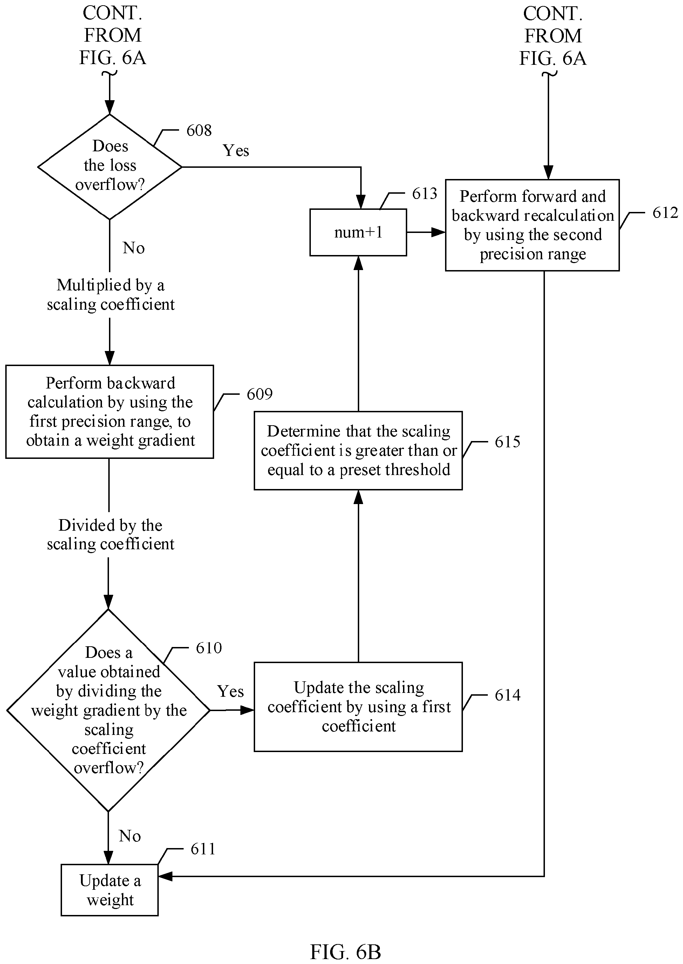

FIG. 6A and FIG. 6B show another model training method according to an embodiment of this application. An execution body of the method is similar to the execution body of the embodiment shown in FIG. 3, and details are not described herein. The method may include step 601 to step 615. The following describes step 601 to step 615 in detail.

Step 601: Obtain training data.

Step 602: Determine whether a quantity of overflow times (num) is greater than or equal to a second threshold (N). If the quantity of overflow times is greater than or equal to the second threshold, step 603 is to be performed. If the quantity of overflow times is less than the second threshold, step 612 is to be performed.

For step 601 and step 602, refer to the descriptions of step 501 and step 502 in the embodiment shown in FIG. 5A and FIG. 5B. Details are not described herein.

Step 603: Perform forward calculation by using a first precision range, to obtain an intermediate feature.

If the quantity of overflow times in step 602 is greater than or equal to the second threshold, execution of this step is triggered.

Step 604: Determine whether the intermediate feature overflows. If the intermediate feature overflows, step 605 is to be performed. If the intermediate feature does not overflow, step 607 is to be performed.

After obtaining the intermediate feature, a training device determines whether a calculated value of the intermediate feature overflows. If the calculated value of the intermediate feature overflows, step 605 is to be performed. If the calculated value of the intermediate feature does not overflow, step 607 is to be performed.

Step 605: Increase the quantity of overflow times by 1 (that is, num+1).

If the intermediate feature in step 604, a loss in step 608, and/or a value obtained by dividing a weight gradient by a scaling coefficient overflow/overflows the first precision range, execution of this step is triggered.

Step 606: Use a second precision range to calculate the intermediate feature of an overflow layer or calculate the intermediate feature layer by layer starting from a first layer.

This step may be understood as follows: If the intermediate feature overflows the first precision range, the second precision range may be used to perform calculation on the overflow layer or calculation on all layers.

Step 607: Perform forward calculation by using the first precision range, to obtain a loss (loss).

If the intermediate feature in step 604 does not overflow, execution of this step is triggered.

Step 608: Determine whether the loss overflows. If the loss overflows, step 613 is to be performed. If the loss does not overflow, the loss is multiplied by a scaling coefficient, and step 609 is to be performed.

Step 609: Perform backward calculation by using the first precision range, to obtain a weight gradient.

Step 610: Determine whether a value obtained by dividing the weight gradient by the scaling coefficient overflows. If the value obtained by dividing the weight gradient by the scaling coefficient overflows, step 614 is to be performed. If the value obtained by dividing the weight gradient by the scaling coefficient does not overflow, step 611 is to be performed.

Step 611: Update a weight.

Step 612: Perform forward and backward recalculation by using the second precision range.

Step 613: Increase the quantity of overflow times by 1 (that is, num+1).

Step 614: Update the scaling coefficient by using a first coefficient.

Step 615: Determine that the scaling coefficient is greater than or equal to a preset threshold.

For step 607 to step 615, refer to the descriptions of step 503 to step 511 in the embodiment shown in FIG. 5A and FIG. 5B. Details are not described herein.

In this embodiment of this application, when calculation of the intermediate feature overflows the first precision range, the second precision range may be used to calculate the intermediate feature of the overflow layer or calculate the intermediate feature layer by layer starting from a network structure of the first layer. In other words, adjustment of the precision range may be adjustment of a specific layer, or may be adjustment of all layers of an entire network structure. On the one hand, the precision range is automatically adjusted in real time by using overflow information generated in a forward calculation process and/or a backward calculation process, so that memory occupied by model training can be reduced, and model training efficiency can be improved. In this way, problems such as training stagnation that are caused because the parameter calculation overflows the first precision range are reduced. In addition, in this embodiment of this application, compared with a method in a conventional technology in which a type of a network layer of a model needs to be used to determine whether to use a high-precision floating-point number or a low-precision floating-point number, a precision range to which a parameter is applicable may be adjusted in real time by using overflow information of the parameter, and an overflow problem caused by calculation of a low-precision floating-point number is reduced. On the other hand, the initial precision range may be adjusted, and when the first precision range affects training of the model, the initial precision range is adjusted from the first precision range to the second precision range, to ensure accuracy of subsequent model training. On the other hand, in the backward calculation process, a lower limit of a value of the scaling coefficient is set, to reduce a risk of subsequent parameter precision underflow.

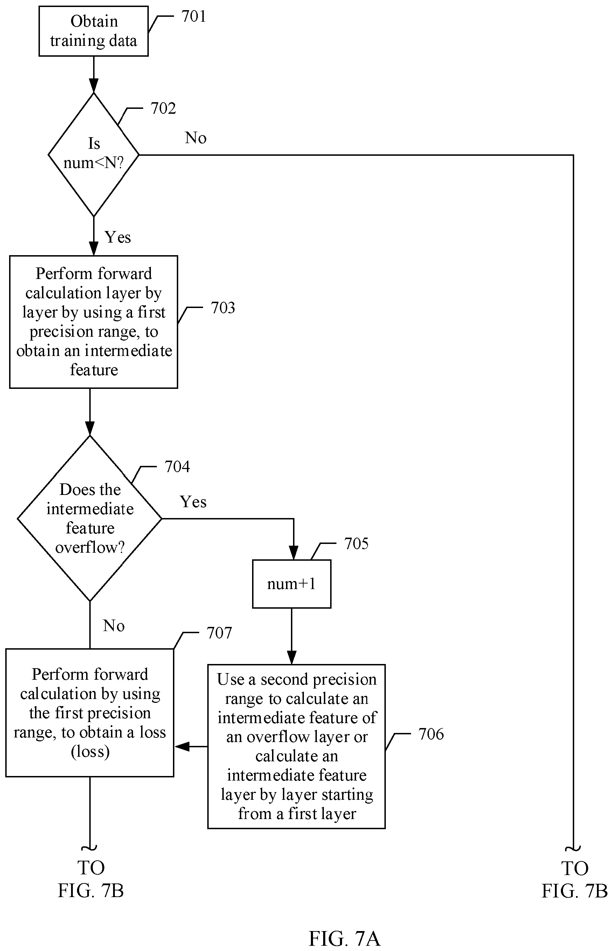

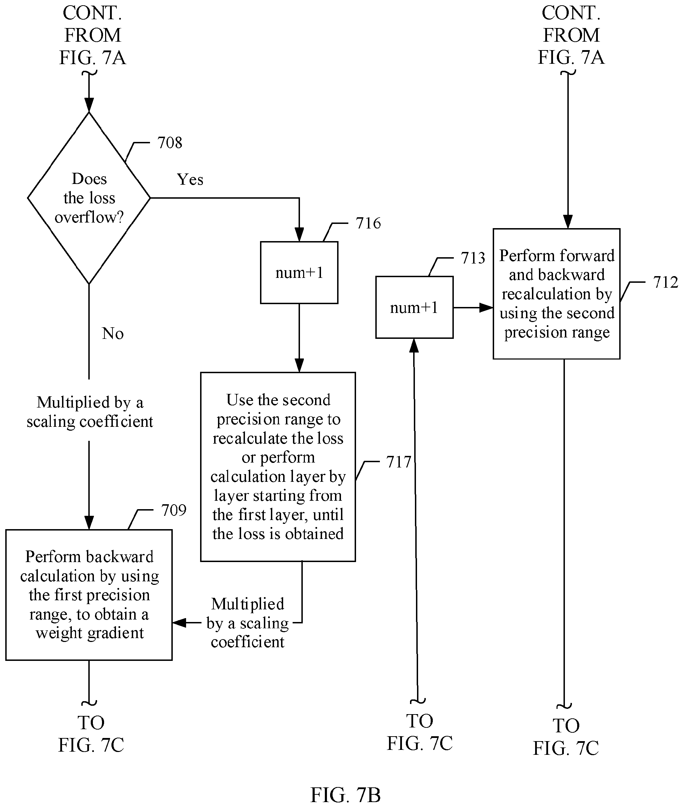

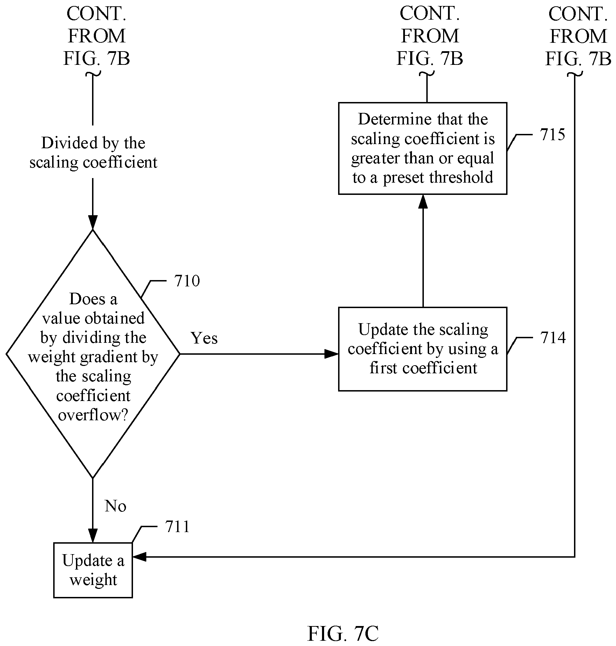

FIG. 7A, FIG. 7B, and FIG. 7C show another model training method according to an embodiment of this application. An execution body of the method is similar to the execution body of the embodiment shown in FIG. 3, and details are not described herein. The method may include step 701 to step 717. The following describes step 701 to step 717 in detail.

Step 701: Obtain training data.

Step 702: Determine whether a quantity of overflow times (num) is greater than or equal to a second threshold (N). If the quantity of overflow times is greater than or equal to the second threshold, step 703 is to be performed. If the quantity of overflow times is less than the second threshold, step 712 is to be performed.

Step 703: Perform forward calculation by using a first precision range, to obtain an intermediate feature.

Step 704: Determine whether the intermediate feature overflows. If the intermediate feature overflows, step 705 is to be performed. If the intermediate feature does not overflow, step 707 is to be performed.

Step 705: Increase the quantity of overflow times by 1 (that is, num+1).

Step 706: Use a second precision range to calculate the intermediate feature of an overflow layer or calculate the intermediate feature layer by layer starting from a first layer.

Step 707: Perform forward calculation by using the first precision range, to obtain a loss (loss).

Step 708: Determine whether the loss overflows. If the loss overflows, step 716 is to be performed. If the loss does not overflow, the loss is multiplied by a scaling coefficient, and step 709 is to be performed.

Step 709: Perform backward calculation by using the first precision range, to obtain a weight gradient.

Step 710: Determine whether a value obtained by dividing the weight gradient by the scaling coefficient overflows. If the value obtained by dividing the weight gradient by the scaling coefficient overflows, step 714 is to be performed. If the value obtained by dividing the weight gradient by the scaling coefficient does not overflow, step 711 is to be performed.

Step 711: Update a weight.

Step 712: Perform forward and backward recalculation by using the second precision range.

Step 713: Increase the quantity of overflow times by 1 (that is, num+1).

Step 714: Update the scaling coefficient by using a first coefficient.

Step 715: Determine that the scaling coefficient is greater than or equal to a preset threshold.

For step 701 to step 715, refer to the descriptions of step 601 to step 615 in the embodiment shown in FIG. 6A and FIG. 6B. Details are not described herein.

Step 716: Increase the quantity of overflow times by 1 (that is, num+1).

Step 716 is similar to step 705. In other words, the quantity of overflow times is an accumulated quantity of times that the intermediate feature, the loss, and the weight gradient overflow the first precision range in a training process of a model.

Step 717: Use the second precision range to recalculate the loss or perform calculation layer by layer starting from the first layer, until the loss is obtained. The loss is multiplied by the scaling coefficient, and step 709 is to be performed.

This step may be understood as follows: If the loss overflows the first precision range, the second precision range may be used to perform final recalculation on the loss for precision range adjustment, or calculation on all layers of a model for precision range adjustment.

In this embodiment of this application, when calculation of the loss overflows the first precision range, the second precision range may be used to recalculate the loss or perform calculation layer by layer starting from a network structure of the first layer, until the loss is obtained. In other words, adjustment of the precision range may be adjustment of a specific layer, or may be adjustment of all layers of an entire network structure. On the one hand, the precision range is automatically adjusted in real time by using overflow information generated in a forward calculation process and/or a backward calculation process, so that memory occupied by model training can be reduced, and model training efficiency can be improved. In this way, problems such as training stagnation that are caused because the parameter calculation overflows the first precision range are reduced. In addition, in this embodiment of this application, compared with a method in a conventional technology in which a type of a network layer of a model needs to be used to determine whether to use a high-precision floating-point number or a low-precision floating-point number, a precision range to which a parameter is applicable may be adjusted in real time by using overflow information of the parameter, and an overflow problem caused by calculation of a low-precision floating-point number is reduced. On the other hand, the initial precision range may be adjusted, and when the first precision range affects training of the model, the initial precision range is adjusted from the first precision range to the second precision range, to ensure accuracy of subsequent model training. On the other hand, in the backward calculation process, a lower limit of a value of the scaling coefficient is set, to reduce a risk of subsequent parameter precision underflow.

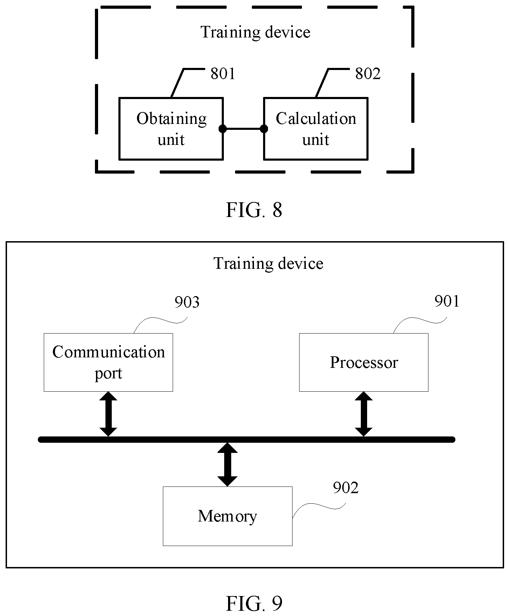

The foregoing describes the model training method in embodiments of this application. The following describes a training device in embodiments of this application. Refer to FIG. 8. An embodiment of the training device in embodiments of this application includes:

an obtaining unit 801, configured to obtain training data; and
a calculation unit 802, configured to use the training data as an input of a model, and in a training process of the model, calculate a parameter by using a first precision range, to obtain a calculated value.

The calculation unit 802 is further configured to: if the calculated value overflows the first precision range, recalculate the parameter by using a second precision range, and perform iterative training on the model for one or more times by using a recalculated parameter, where the second precision range includes the first precision range, or the second precision range partially overlaps the first precision range.

Optionally, the model includes a plurality of network structures, and the calculation unit 802 is specifically configured to recalculate the parameter by using the second precision range, starting from a network structure of a first layer of the model.

Optionally, the calculation unit 802 is specifically configured to recalculate the parameter by using the second precision range, starting from a current network structure in which the calculated value overflows.

Optionally, the model includes a plurality of network structures, and the parameter includes one or more of the following: an intermediate feature or a value of a loss function of the model, calculated by the plurality of network structures in a forward propagation process, where the intermediate feature is an output feature of any one of the plurality of network structures; and a gradient calculated by the plurality of network structures in a backward propagation process, where the gradient includes a gradient of the intermediate feature and/or a weight gradient of the model.

Optionally, when the parameter includes the gradient calculated in the backward propagation process, the calculated value is a value obtained by dividing the gradient by a scaling coefficient, and the scaling coefficient is used to reduce a probability that the gradient overflows. The calculation unit 802 is further configured to update the scaling coefficient by using a first coefficient, where an updated scaling coefficient is used to replace the scaling coefficient that is not updated, to perform next iterative training of the model, the first coefficient is a positive number less than 1, and a minimum value of the scaling coefficient is a preset threshold greater than or equal to 1.

Optionally, when the parameter includes the intermediate feature calculated in the forward propagation process, the calculation unit 802 is specifically configured to use the second precision range to calculate the intermediate feature of an overflow layer or calculate the intermediate feature layer by layer starting from the network structure of the first layer, where the overflow layer is a network structure that is in the plurality of network structures and in which a calculated value of the intermediate feature overflows the first precision range.

Optionally, when the parameter includes the value of the loss function of the model, the calculation unit 802 is specifically configured to use the second precision range to calculate the value of the loss function or perform calculation layer by layer starting from the network structure of the first layer, until the value of the loss function is obtained.

Optionally, the calculation unit 802 is specifically configured to obtain, in an $N^{th}$ iteration in the training process of the model, a quantity of overflow times of the plurality of network structures in the model based on the first precision range, where N is a positive integer greater than or equal to 1. The calculation unit 802 is specifically configured to: if the quantity of overflow times is greater than or equal to a second threshold, determine that an initial precision range in a next iterative training process is to be changed from the first precision range to the second precision range, and clear the quantity of overflow times to zero.

Optionally, the quantity of overflow times includes: a quantity of overflow times of the plurality of network structures in the forward propagation process, and/or a quantity of overflow times of the plurality of network structures in the backward propagation process.

In this embodiment, operations performed by the units in the training device are similar to those described in the embodiments shown in FIG. 1 to FIG. 7A, FIG. 7B, and FIG. 7C. Details are not described herein.

In this embodiment, when the calculated value of the parameter overflows the first precision range in the training process of the model, the calculation unit 602 recalculates the parameter by using the second precision range. That is, the precision range is automatically adjusted in real time by using overflow information of the calculated value of the parameter, so that memory occupied by model training can be reduced, and model training efficiency can be improved.

In this way, problems such as training stagnation that are caused because the parameter calculation overflows the first precision range are reduced. In addition, in this embodiment of this application, compared with a method in a conventional technology in which a type of a network layer of a model needs to be used to determine whether to use a high-precision floating-point number or a low-precision floating-point number, a precision range to which a parameter is applicable may be adjusted in real time by using overflow information of the parameter, and an overflow problem caused by calculation of a low-precision floating-point number is reduced.

FIG. 9 is a diagram of a structure of another training device according to this application. The training device may include a processor 901, a memory 902, and a communication port 903. The processor 901, the memory 902, and the communication port 903 are interconnected by using a line. The memory 902 stores program instructions and data.

The memory 902 stores program instructions and data that correspond to the steps performed by the training device in the corresponding implementations shown in FIG. 1 to FIG. 7A, FIG. 7B, and FIG. 7C.

The processor 901 is configured to perform the steps performed by the training device in any one of the embodiments shown in FIG. 1 to FIG. 7A, FIG. 7B, and FIG. 7C.

The communication port 903 may be configured to receive and send data, and is configured to perform steps related to obtaining and receiving in any one of the embodiments shown in FIG. 1 to FIG. 7A, FIG. 7B, and FIG. 7C.

In an implementation, the training device may include more or fewer components than those shown in FIG. 9. This is merely an example for description, but is not limited in this application.

It may be clearly understood by a person skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or the units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A model training method, wherein the method comprises:

   obtaining training data;
   using the training data as an input of a model, and in a training process of the model, calculating a parameter by using a first precision range, to obtain a calculated value; and
   if the calculated value overflows the first precision range, recalculating the parameter by using a second precision range, and performing iterative training on the model for one or more times by using a recalculated parameter, wherein the second precision range comprises the first precision range, or the second precision range partially overlaps the first precision range.

2. The method according to claim 1, wherein the model comprises a plurality of network structures, and the recalculating the parameter by using a second precision range comprises:
recalculating the parameter by using the second precision range, starting from a network structure of a first layer of the model.

3. The method according to claim 1, wherein the model comprises a plurality of network structures, and the recalculating the parameter by using a second precision range comprises:
recalculating the parameter by using the second precision range, starting from a current network structure in which the calculated value overflows.

4. The method according to any one of claims 1 to 3, wherein the model comprises a plurality of network structures, and the parameter comprises one or more of the following:

   an intermediate feature or a value of a loss function of the model, calculated by the plurality of network structures in a forward propagation process, wherein the intermediate feature is an output feature of any one of the plurality of network structures; and
   a gradient calculated by the plurality of network structures in a backward propagation process, wherein the gradient comprises a gradient of the intermediate feature and/or a weight gradient of the model.

5. The method according to claim 4, wherein when the parameter comprises the gradient calculated in the backward propagation process, the calculated value is a value obtained by dividing the gradient by a scaling coefficient, the scaling coefficient is used to reduce a probability that the gradient overflows, and the method further comprises:
updating the scaling coefficient by using a first coefficient, wherein an updated scaling coefficient is used to replace the scaling coefficient that is not updated, to perform next iterative training of the model, the first coefficient is a positive number less than 1, and a minimum value of the scaling coefficient is a preset threshold greater than or equal to 1.

6. The method according to claim 4, wherein when the parameter comprises the intermediate feature calculated in the forward propagation process, the recalculating the parameter by using a second precision range comprises:
using the second precision range to calculate the intermediate feature of an overflow layer or calculate the intermediate feature layer by layer starting from the network structure of the first layer, wherein the overflow layer is a network structure that is in the plurality of network structures and in which a calculated value of the intermediate feature overflows the first precision range.

7. The method according to claim 4, wherein when the parameter comprises the value of the loss function of the model, the recalculating the parameter by using a second precision range comprises:
using the second precision range to calculate the value of the loss function or perform calculation layer by layer starting from the network structure of the first layer, until the value of the loss function is obtained.

8. The method according to any one of claims 1 to 7, wherein the training the model by using the recalculated parameter comprises:

   obtaining, in an $N^{th}$ iteration in the training process of the model, a quantity of overflow times of the plurality of network structures in the model based on the first precision range, wherein N is a positive integer greater than or equal to 1; and
   if the quantity of overflow times is greater than or equal to a second threshold, determining that an initial precision range in a next iterative training process is to be changed from the first precision range to the second precision range, and clearing the quantity of overflow times to zero.

9. The method according to claim 8, wherein the quantity of overflow times comprises: a quantity of overflow times of the plurality of network structures in the forward propagation process, and/or a quantity of overflow times of the plurality of network structures in the backward propagation process.

10. A training device, wherein the training device comprises:

   an obtaining unit, configured to obtain training data; and
   a calculation unit, configured to use the training data as an input of a model, and in a training process of the model, calculate a parameter by using a first precision range, to obtain a calculated value, wherein
   the calculation unit is further configured to: if the calculated value overflows the first precision range, recalculate the parameter by using a second precision range, and perform iterative training on the model for one or more times by using a recalculated parameter, wherein the second precision range comprises the first precision range, or the second precision range partially overlaps the first precision range.

11. The training device according to claim 10, wherein the model comprises a plurality of network structures, and the calculation unit is specifically configured to recalculate the parameter by using the second precision range, starting from a network structure of a first layer of the model.

12. The training device according to claim 10, wherein the calculation unit is specifically configured to recalculate the parameter by using the second precision range, starting from a current network structure in which the calculated value overflows.

13. The training device according to any one of claims 10 to 12, wherein the model comprises a plurality of network structures, and the parameter comprises one or more of the following:

an intermediate feature or a value of a loss function of the model, calculated by the plurality of network structures in a forward propagation process, wherein the intermediate feature is an output feature of any one of the plurality of network structures; and
a gradient calculated by the plurality of network structures in a backward propagation process, wherein the gradient comprises a gradient of the intermediate feature and/or a weight gradient of the model.

14. The training device according to claim 13, wherein when the parameter comprises the gradient calculated in the backward propagation process, the calculated value is a value obtained by dividing the gradient by a scaling coefficient, and the scaling coefficient is used to reduce a probability that the gradient overflows; and the calculation unit is further configured to update the scaling coefficient by using a first coefficient, wherein an updated scaling coefficient is used to replace the scaling coefficient that is not updated, to perform next iterative training of the model, the first coefficient is a positive number less than 1, and a minimum value of the scaling coefficient is a preset threshold greater than or equal to 1.

15. The training device according to claim 13, wherein when the parameter comprises the intermediate feature calculated in the forward propagation process, the calculation unit is specifically configured to use the second precision range to calculate the intermediate feature of an overflow layer or calculate the intermediate feature layer by layer starting from the network structure of the first layer, wherein the overflow layer is a network structure that is in the plurality of network structures and in which a calculated value of the intermediate feature overflows the first precision range.

16. The training device according to claim 13, wherein when the parameter comprises the value of the loss function of the model, the calculation unit is specifically configured to use the second precision range to calculate the value of the loss function or perform calculation layer by layer starting from the network structure of the first layer, until the value of the loss function is obtained.

17. The training device according to any one of claims 10 to 16, wherein the calculation unit is specifically configured to obtain, in an $N^{th}$ iteration in the training process of the model, a quantity of overflow times of the plurality of network structures in the model based on the first precision range, wherein N is a positive integer greater than or equal to 1; and the calculation unit is specifically configured to: if the quantity of overflow times is greater than or equal to a second threshold, determine that an initial precision range in a next iterative training process is to be changed from the first precision range to the second precision range, and clear the quantity of overflow times to zero.

18. The training device according to claim 17, wherein the quantity of overflow times comprises: a quantity of overflow times of the plurality of network structures in the forward propagation process, and/or a quantity of overflow times of the plurality of network structures in the backward propagation process.

19. A training device, comprising a processor, wherein the processor is coupled to a memory, the memory is configured to store a program or instructions, and when the program or the instructions are executed by the processor, the training device is enabled to perform the method according to any one of claims 1 to 9.

20. A computer storage medium, comprising computer instructions, wherein when the computer instructions are run on a training end device, the training device is enabled to perform the method according to any one of claims 1 to 9.

21. A computer program product, wherein when the computer program product is run on a computer, the computer is enabled to perform the method according to any one of claims 1 to 9.

FIG. 1

EP 4 550 209 A1

```
                    ┌─────────────────────────┐
                    │  Weight memory 202      │
                    └───────────┬─────────────┘
                                │
                                ▼
┌──────────┐          ┌──────────────────┐   ┌────────────────────┐
│ Host CPU │◄────┐    │ Input memory 201 │──►│  Operation circuit │◄──┐
└──────────┘     │    └──────────────────┘   │        203         │   │
     ▲           │              ▲            └─────────┬──────────┘   │
     │           │              │                      │              │
     │           │    ┌──────────────────┐   ┌──────────────────┐     │
     │           │    │ Vector calculation│◄─►│   Accumulator    │     │
     │           │    │    unit 207      │   │       208        │     │
     │           │    └─────────┬────────┘   └──────────────────┘     │
     │           │              │                                     │
     │    ┌──────────────┐ ┌──────────────┐ ┌────────────┐ ┌──────────────────┐
     │    │ Direct memory│ │   Unified    │ │ Controller │ │ Instruction fetch│
     │    │    access    │◄►│ memory 206  │ │    204     │◄│   buffer 209    │
     │    │controller 205│ └──────────────┘ └────────────┘ └──────────────────┘
     │    └──────┬───────┘                         
     │           │                                  
┌──────────┐  ┌──────────────────────────────────────────────────────────┐
│ External │◄─│              Bus interface unit 210                       │
│  memory  │  └──────────────────────────────────────────────────────────┘
└──────────┘

                      Neural-network processing unit 20
```

FIG. 2

| Obtain training data | 301 |

↓

| Use the training data as an input of a model, and in a training process of the model, calculate a parameter by using a first precision range, to obtain a calculated value | 302 |

↓

| If the calculated value overflows the first precision range, recalculate the parameter by using a second precision range, and perform iterative training on the model for one or more times by using a recalculated parameter | 303 |

FIG. 3

Hidden layer

Input layer

Output layer

$W_{43}^2$

$W_{24}^3$

FIG. 4

Obtain training
data — 501

— 502

Is num<N? — No

Yes

Perform forward
calculation by using a first
precision range, to obtain a
loss (loss) — 503

Does
the loss
overflow? — 504 — Yes

No

Multiplied by a
scaling coefficient

num+1 — 509

Perform forward and
backward recalculation
by using a second
precision range — 508

TO
FIG. 5B

TO
FIG. 5B

TO
FIG. 5B

FIG. 5A

CONT.
FROM
FIG. 5A

CONT.
FROM
FIG. 5A

CONT.
FROM
FIG. 5A

Perform backward
calculation by using the
first precision range, to
obtain a weight gradient

505

Determine that the scaling
coefficient is greater than
or equal to a preset
threshold

511

Divided by the
scaling coefficient

Does a
value obtained
by dividing the
weight gradient by
the scaling
coefficient
overflow?

506

Yes

Update the scaling
coefficient by using a first
coefficient

510

No

507

Update a
weight

FIG. 5B

Obtain training data — 601

Is num<N? — 602

No

Yes

Perform forward calculation layer by layer by using a first precision range, to obtain an intermediate feature — 603

Does the intermediate feature overflow? — 604

Yes

num+1 — 605

No

Perform forward calculation by using the first precision range, to obtain a loss (loss) — 607

Use a second precision range to calculate an intermediate feature of an overflow layer or calculate an intermediate feature layer by layer starting from a first layer — 606

TO
FIG. 6B

TO
FIG. 6B

FIG. 6A

CONT.
FROM
FIG. 6A

CONT.
FROM
FIG. 6A

608 Does the loss overflow?

Yes

No

613 num+1

612 Perform forward and backward recalculation by using the second precision range

Multiplied by a scaling coefficient

609 Perform backward calculation by using the first precision range, to obtain a weight gradient

615 Determine that the scaling coefficient is greater than or equal to a preset threshold

Divided by the scaling coefficient

610 Does a value obtained by dividing the weight gradient by the scaling coefficient overflow?

Yes

614 Update the scaling coefficient by using a first coefficient

No

611 Update a weight

FIG. 6B

FIG. 7A

CONT.
FROM
FIG. 7A

CONT.
FROM
FIG. 7A

708

Does
the loss
overflow?

Yes

716

num+1

713

num+1

Perform forward
and backward
recalculation by
using the second
precision range

712

No

Multiplied by a
scaling coefficient

Use the second
precision range to
recalculate the loss
or perform
calculation layer by
layer starting from
the first layer, until
the loss is obtained

717

709

Perform backward
calculation by using
the first precision
range, to obtain a
weight gradient

Multiplied
by a scaling
coefficient

TO
FIG. 7C

TO
FIG. 7C

TO
FIG. 7C

FIG. 7B

CONT.
FROM
FIG. 7B

CONT.
FROM
FIG. 7B

CONT.
FROM
FIG. 7B

Divided by the
scaling coefficient

Determine that the
scaling coefficient is
greater than or equal
to a preset threshold — 715

Does a
value obtained
by dividing the
weight gradient by
the scaling
coefficient
overflow? — 710

Yes

Update the scaling
coefficient by using a
first coefficient — 714

No

Update a
weight — 711

FIG. 7C

33

Training device

801

Obtaining
unit

802

Calculation
unit

FIG. 8

Training device

903

Communication
port

901

Processor

902

Memory

FIG. 9

<div align="center">INTERNATIONAL SEARCH REPORT</div>

| International application No. |
| --- |
| **PCT/CN2023/106905** |

**A.   CLASSIFICATION OF SUBJECT MATTER**

G06N 3/04(2023.01)i

According to International Patent Classification (IPC) or to both national classification and IPC

**B.   FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 模型, 训练, 精度, 第一, 第二, 高, 低, 溢出, 上溢, 下溢, 参数, 梯度, 损失, model, train+, precision, first, second, high, low, overflow, underflow, parameter, gradient, loss

**C.   DOCUMENTS CONSIDERED TO BE RELEVANT**

| Category* | Citation of document, with indication, where appropriate, of the relevant passages | Relevant to claim No. |
| --- | --- | --- |
| X | CN 113255877 A (ALIBABA GROUP HOLDING LIMITED) 13 August 2021 (2021-08-13) description, paragraphs 37-87 and 130-131 | 1-21 |
| A | CN 110097188 A (IFLYTEK CO., LTD.) 06 August 2019 (2019-08-06) entire document | 1-21 |
| A | CN 113435520 A (SHENZHEN SENSETIME TECHNOLOGY CO., LTD.) 24 September 2021 (2021-09-24) entire document | 1-21 |
| A | CN 113888524 A (SHENZHEN CRF DIGITAL TECHNOLOGY CO., LTD.) 04 January 2022 (2022-01-04) entire document | 1-21 |
| A | CN 114065902 A (CHONGJI TECHNOLOGY (BEIJING) CO., LTD.) 18 February 2022 (2022-02-18) entire document | 1-21 |

☐ Further documents are listed in the continuation of Box C.        ☑ See patent family annex.

| | |
| --- | --- |
| * Special categories of cited documents: <br> "A"  document defining the general state of the art which is not considered to be of particular relevance <br> "D"  document cited by the applicant in the international application <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |
| Date of the actual completion of the international search <br><br> **05 September 2023** | Date of mailing of the international search report <br><br> **20 September 2023** |
| Name and mailing address of the ISA/CN <br><br> **China National Intellectual Property Administration (ISA/ CN)** <br> **China No. 6, Xitucheng Road, Jimenqiao, Haidian District, Beijing 100088** | Authorized officer <br><br><br> Telephone No. |

Form PCT/ISA/210 (second sheet) (July 2022)

INTERNATIONAL SEARCH REPORT
Information on patent family members

International application No.

**PCT/CN2023/106905**

| Patent document cited in search report | | | Publication date (day/month/year) | Patent family member(s) | Publication date (day/month/year) |
|---|---|---|---|---|---|
| CN | 113255877 | A | 13 August 2021 | None | |
| CN | 110097188 | A | 06 August 2019 | None | |
| CN | 113435520 | A | 24 September 2021 | None | |
| CN | 113888524 | A | 04 January 2022 | None | |
| CN | 114065902 | A | 18 February 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210832123